# EUROPEAN PATENT APPLICATION

(11) **EP 2 245 936 A1**
(43) Date of publication of application: **03.11.2010**
(21) Application number: 09158789.9
(22) Date of filing: 27.04.2009
(51) Int. Cl.: A01N 43/90, A01P 3/00

(54) **Use of 4-aza indole derivatives for the reduction of mycotoxin contamination**

(71) Applicant: Bayer CropScience AG, 40789 Monheim (DE)
(72) Inventor: The designation of the inventor has not yet been filed

(57) **Abstract**

The present invention relates to a method of the reduction of mycotoxin contamination of plants and/or plant material and/or plant propagation material comprising applying to the plant or plant propagation material a effective amount of a compound of formula (I) 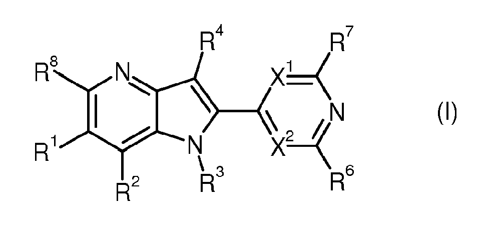 or a salt of N-oxide thereof. In addition, the present invention also relates to a composition comprising a compound of formula (I) and their use in methods for the reduction of mycotoxin contamination in plants.

## Description

The present invention relates to the novel use of 4-aza-indoles, compositions comprising these compounds and their use in methods for the reduction of mycotoxin contamination in plants.

Certain 4-aza-indoles and their use in the prevention and treatment of human and animal disease, although not that caused by fungi, are described in WO 99/20624. Similar compounds are described in WO 03/06629, WO 2006/014325 and WO 98/22457, the latter also disclosing their use as anti-inflammatory agents. In addition, 4-aza-indoles have been described to possess fungicidal activity and, in particular, activity against plant pathogenic fungi as found in WO-A 2008/132434.

Numerous fungi are serious pests of economically important agricultural crops. Further, crop contamination by fungal toxins is a major problem for agriculture throughout the world.

Mycotoxins, such as aflatoxins, ochratoxins, patulin, fumonisins, zearalenones, and trichothecenes, are toxic fungal metabolites, often found in agricultural products that are characterized by their ability to cause health problems for humans and vertebrates. They are produced for example by different Fusarium and Aspergillus, Penicillium und Alternaria species.

Aflatoxins are toxins produced by Aspergillus species that grow on several crops, in particular on maize or corn before and after harvest of the crop as well as during storage. The biosynthesis of aflatoxins involves a complex polyketide pathway starting with acetate and malonate. One important intermediate is sterigmatocystin and O-methylsterigmatocystin which are direct precursors of aflatoxins. Important producers of aflatoxins are Aspergillus flavus, most strains of Aspergillus parasiticus, Aspergillus nomius, Aspergillus bombycis, Aspergillus pseudotamarii, Aspergillus ochraceoroseus, Aspergillus rambelli, Emericella astellata, Emericella venezuelensis, Bipolaris spp., Chaetomium spp., Farrowia spp., and Monocillium spp., in particular Aspergillus flavus and Aspergillus parasiticus (Plant Breeding (1999), 118, pp 1 - 16). There are also additional Aspergillus species known. The group of aflatoxins consists of more than 20 different toxins, in particular aflatoxin B1, B2, G1 and G2, cyclopiazonic acid (CPA).

Ochratoxins are mycotoxins produced by some *Aspergillus* species and *Penicilium* species, like *A. ochraceus, A. carbonarius* or *P. viridicatum,* Examples for Ochratoxins are ochratoxin A, B, and C. Ochratoxin A is the most prevalent and relevant fungal toxin of this group.

Fumonisins are toxins produced by Fusarium species that grow on several crops, mainly corn, before and after harvest of the crop as well as during storage. The diseases, Fusarium kernel, ear and stalk rot of corn, is caused by Fusarium verticillioides, F. subglutinans, F. *moniliforme,* and F. proliferatum. The main mycotoxins of these species are the fumonisins, of which more than ten chemical forms have been isolated. Examples for fumonisins are FB1, FB2 and FB3. In addition the above mentioned Fusarium species of corn can also produce the mycotoxins moniliformin and beauvericin. In particular Fusarium verticillioides is mentioned as an important pathogen of corn, this Fusarium species produces as the main mycotoxin fumonisins of the B-type.

Trichothecenes are those mycotoxins of primary concern which can be found in Fusarium diseases of small grain cereals like wheat, barley, rye, triticale, rice, sorghum and oat. They are sesquiterpene epoxide mycotoxins produced by species of Fusarium, Trichothecium, and Myrothecium and act as potent inhibitors of eukaryotic protein synthesis.

Some of these trichothecene producing Fusarium species also infect corn or maize.

Examples of trichothecene mycotoxins include T-2 toxin, HT-2 toxin, isotrichodermol, DAS, 3-deacetylcalonectrin, 3,15-dideacetylcalonectrin, scirpentriol, neosolaniol; 15-acetyldeoxynivalenol, 3-acetyldeoxynivalenol, nivalenol, 4-acetylnivalenol (fusarenone-X), 4,15-diacetylnivalenol, 4,7,15-acetylnivalenol, and deoxynivalenol (hereinafter "DON") and their various acetylated derivatives. The most common trichothecene in Fusarium head blight is DON produced for example by Fusarium graminearum and F. culmorum.

Another mycotoxin mainly produced by F. culmorum, F. graminearum and F. cerealis is zearalenone, a phenolic resorcyclic acid lactone that is primarily an estrogenic fungal metabolite.

Fusarium species that produce mycotoxins, such as fumonisins and trichothecenes, include F. acuminatum, F. crookwellense, F., verticillioides, F. culmorum, F. avenaceum, F. equiseti, F. moniliforme, *F,* graminearum (Gibberella zeae), F. lateritium, F. poae, F. sambucinum (G. pulicaris), F. proliferatum, F. subglutinans, *F.* sporotrichioides and other Fusarium species.

In contrast the species Microdochium nivale also a member of the so-called Fusarium complex is known to not produce any mycotoxins.

Both acute and chronic mycotoxicoses in farm animals and in humans have been associated with consumption of wheat, rye, barley, oats, rice and maize contaminated with Fusarium species that produce trichothecene mycotoxins. Experiments with chemically pure trichothecenes at low dosage levels have reproduced many of the features observed in moldy grain toxicoses in animals, including anemia and immunosuppression, haemorrage, emesis and feed refusal. Historical and epidemiological data from human populations indicate an association between certain disease epidemics and consumption of grain infected with Fusarium species that produce trichothecenes. In particular, outbreaks of a fatal disease known as alimentary toxic aleukia, which has occurred in Russia since the nineteenth century, have been associated with consumption of over-wintered grains contaminated with Fusarium species that produce the trichothecene T-2 toxin. In Japan, outbreaks of a similar disease called akakabi-byo or red mold disease have been associated with grain infected with Fusarium species that produce the trichothecene, DON. Trichothecenes were detected in the toxic grain samples responsible for recent human disease outbreaks in India and Japan. There exists, therefore, a need for agricultural methods for preventing, and crops having reduced levels of, mycotoxin contamination.

Further, mycotoxin-producing Fusarium species are destructive pathogens and attack a wide range of plant species. The acute phytotoxicity of mycotoxins and their occurrence in plant tissues also suggests that these mycotoxins play a role in the pathogenesis of Fusarium on plants. This implies that mycotoxins play a role in disease and, therefore, reducing their toxicity to the plant may also prevent or reduce disease in the plant. Further, reduction in disease levels may have the additional benefit of reducing mycotoxin contamination on the plant and particularly in grain where the plant is a cereal plant.

There is a need, therefore, to decrease the contamination by mycotoxins of plants and plant material before and/or after harvest and/or during storage.

WO 2007/009988 describes the use of growth regulators like trinexapac-ethyl and prohexadion-calcium for reducing or preventing the contamination of cereals with mycotoxin.

WO 2007/009969 describes the combined use of metconazole and epoxiconazole for reducing of preventing the contamination of cereals with mycotoxin. WO 2007/003320 describes the method for treating fungi-infested plant propagation material with one or more chemical fungicides to reduce mycotoxin contamination of plants and/or harvested plant material. WO 2006/106742 describes the use of benzimidazole or the use of combinations comprising benzimidazoles and sterol biosynthesis inhibitors in order to inhibit the mycotoxin generation of fungi in crops. JP2008-19194 describes the use of quarternary ammonium salts alone or in combination with fungicides for reduction of mycotoxins in cereals. EP-A1 1864574 describes the use of thiophanate for the purpose of reduction of mycotoxins.

The effect of fungicides on mycotoxin contamination in crops is discussed controversially as contradicting results are found. Disease development and mycotoxin production by the infecting fungi is influenced by a variety of factors not being limited to weather conditions, agricultural techniques, fungicide dose and application, growth stage of crops, colonization of crops by different fungi species, susceptibility of host crops and infection mode of fungi species. For example Microdochium nivale not producing any mycotoxin is able to reduce growth and DON accumulation of F. culmorum. It is also known that the different fungi use separate routes when infecting the plant. For example Fusarium species producing fumonisins are known to infect maize by wound inoculation. The wounds are mainly caused by insects like the European and Southwestern corn borer or the corn earworm, in particular by the European corn borer (Ostrinia nubialis). Therefore it is discussed that maize being transformed with genes coding for insecticidal proteins for example with those from Bacillus thuringiensis should show reduced level of mycotoxins, in particular fumonisins (Wu, Transgenic Research (2006), 15, 277-289). In contrast other fungal species for example Fusarium graminearum and Aspergillus flavus are infecting maize via the silk channel. Also insect pest damage is less strongly correlated with aflatoxin concentrations in maize, because a variety of factors is influencing aflatoxin content in maize (Wu, Transgenic Research (2006), 15, 277-289).

Therefore prohibiting fungal infection via controlling insects that promote infection by wounding is not sufficient for reducing effectively mycotoxin contamination of maize, especially for DON, Zearalenone and aflatoxins.

It has also to be mentioned that breeding for fungal resistance in crops in contrast to insecticidal resistance is much more difficult. There have been several classical and transgenic breeding approaches, but obviously a high level of resistance is difficult to obtain.

Therefore the problem to be solved by the present invention is to provide compounds which lead by their application on plants and/or plant material to a reduction in mycotoxins in all plant and plant material.

Accordingly, the present invention provides a method of reducing mycotoxin contamination in plants and/or any plant material and/or plant propagation material comprising applying to the plant or plant propagation material an effective amount of a compound of formula (I): 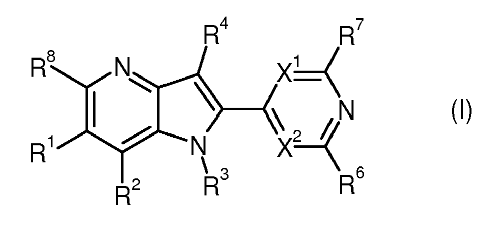 wherein:
- X¹: is N or CH;
- X²: is N or CR⁵
- R¹ and R²: are, independently,: (i) hydrogen, halogen, hydroxyl, cyano or nitro, (ii) optionally substituted alkyl, alkenyl or alkynyl,
(iii) optionally substituted aryl, heteroaryl, cyclyl or heterocyclyl, or
(iv) -C(O)R¹⁰, -C(O)NR¹⁰R¹¹, -C(S)NR¹⁰R¹¹, -C(NOR¹⁰)R¹¹, -C(O)OR¹⁰, -OR¹⁰, -SR¹⁰, -S(O)R¹⁰, -S(O)NR¹⁰R¹¹, -S(O)₂NR¹⁰R¹¹, -S(O)₂R¹⁰, -NR¹⁰R¹¹, -P(O)(OR¹⁰XOR¹¹) or -OP(O)(OR¹⁰XOR¹¹);
- R³: is: (i) hydrogen, hydroxyl, cyano or nitro, (ii) optionally substituted alkyl, alkenyl, allenyl, alkynyl or haloalkyl, (iii) optionally substituted aryl, heteroaryl, cyclyl or heterocyclyl or heteroaralkyl or (iv) -C(O)R¹², -C(O)OR¹², -OR¹², -OC(O)R¹², -S(O)₂R¹² or -NR¹²R¹³;
- R⁴: is: (i) hydrogen, halogen, hydroxyl, cyano or nitro, (ii) optionally substituted alkyl, alkenyl, allenyl, alkynyl or haloalkyl, (iii) optionally substituted aryl, heteroaryl, cyclyl or heterocyclyl or (iv) -C(O)R¹⁴, -C(O)OR¹⁴, -C(NOR¹⁴)R¹⁵, -OR¹⁴, -SR¹⁴, -S(O)NR¹⁴R¹⁵, -S(O)₂R¹⁴, or - NR¹⁴R¹⁵;
- R⁵: is: (i) hydrogen, halogen, hydroxyl, cyano or nitro, (ii) optionally substituted alkyl, alkenyl or alkynyl, (iii) -C(O)R¹⁶, -C(O)OR¹⁶, -OR¹⁶, - SR¹⁶, -S(O)R¹⁶, -S(O)NR¹⁶R¹⁷, -S(O)₂R¹⁶, or -NR¹⁶R¹⁷;
- R⁶: is hydrogen, halogen, cyano, -C(O)OR¹⁸, -SR¹⁸, -NR¹⁸R¹⁹, -C(O)NR¹⁸R¹⁹ or -N=CR²⁰, - C(=NR¹⁸)NR¹⁹R²⁰ or optionally substituted aryl, heteroaryl, cyclyl or heterocyclyl;
- R⁷ and R⁸: are, independently, hydrogen, halogen, hydroxyl, cyano, nitro, -NR²¹ R²² or optionally substituted alkyl;
- R¹⁰, R¹¹, R¹⁴, R¹⁵, R¹⁶ and R¹⁷: are, independently, hydrogen, halogen, hydroxyl, cyano, nitro, optionally substituted alkyl, alkoxy, alkenyl or alkynyl, or optionally substituted aryl, heteroaryl, cyclyl or heterocyclyl;
- R¹² and R¹³: are, independently, hydrogen, halogen, hydroxyl, cyano, nitro, -NR²¹R²², optionally substituted alkyl, alkoxy, alkenyl or alkynyl, or optionally substituted aryl, heteroaryl, cyclyl or heterocyclyl;
- R¹⁸ and R¹⁹: are, independently, (i) hydrogen, (ii) optionally substituted alkyl, alkenyl or alkynyl, (iii) optionally substituted aryl, heteroaryl, cyclyl or heterocyclyl, or (iv) -C(S)R²³ -C(O)R²³, -SO₂R²³, -C(O)OR²³, -OR²³ or C(O)NR²³R²⁴;
- R²⁰: is hydroxyl, optionally substituted alkyl or alkoxy or -NR²¹R²², or -N=CR²¹R²²;
- R²¹ and R²²: are, independently, hydrogen, optionally substituted alkyl, alkenyl or alkynyl, optionally substituted cyclyl, heterocyclyl, aryl, or heteroaryl or aralkyl or -C(O)OR²⁵ ;
- R²³ and R²⁴: are, independently, hydrogen, hydroxyl, optionally substituted alkyl, alkenyl or alkynyl, or optionally substituted aryl, heteroaryl, cyclyl or heterocyclyl or aralkyl; and
- R²⁵: is optionally substituted alkyl, alkenyl or alkynyl;
and/or
independently, (i) R¹ and R², (ii) R¹ and R³ (iii) R² and R³, (iv) R³ and R⁵, (v) R⁵ and R⁶, (vi) R⁵ and R¹⁸, (vii) R⁵ and R¹⁹, (viii) R¹⁴ and R¹⁵ and (ix) R¹⁸ and R¹⁹ form an optionally substituted aryl, heteroaryl, cyclyl or heterocyclyl group containing from 5 to 18 ring atoms;
or a salt of N-oxide thereof. Unless otherwise stated, the following terms used in the specification and claims have the meanings given below:
"Alkyl" means a linear saturated monovalent hydrocarbon radical of one to eight carbon atoms or a branched saturated monovalent hydrocarbon radical of three to eight carbon atoms, e.g. methyl, ethyl, *n*-propyl, *iso*-propyl, *n*-butyl, .*sec*-butyl, *iso*-butyl, *tert*-
butyl, *n*-pentyl, *n*-hexyl and the like. Preferably, linear alkyl groups contain one to six carbon atoms, more preferably one to four carbon atoms and most preferably are selected from methyl, ethyl or *n*-propyl. Preferably, branched alkyl groups contain three to six carbon atoms and more preferably are selected from *iso*-propyl, *sec*-butyl, *iso*-butyl or *tert-* butyl.

"Alkenyl" means a linear monovalent saturated hydrocarbon radical of two to eight carbon atoms, or a branched monovalent hydrocarbon radical of three to eight carbon atoms containing at least one double bond, e.g. ethenyl, propenyl and the like. Where appropriate, an alkenyl group can be of either the (E)- or (Z)-configuration. Preferably, linear alkenyl groups contain two to six carbon atoms and more preferably are selected from ethenyl, prop- 1-enyl, prop-2-enyl, prop-1,2-dienyl, but-1-enyl, but-2-enyl, but-3-enyl, but-1,2-dienyl and but-1,3-dienyl. Preferably, branched alkenyl groups contain three to six carbon atoms and more preferably are selected from 1-methylethenyl, 1-methylprop-l-enyl, 1-methylprop-2- enyl, 2-methylprop-l-enyl and 2-methylprop-2-enyl.

"Allenyl" means a linear monovalent saturated hydrocarbon radical of three to eight carbon atoms, or a branched monovalent hydrocarbon radical of three to eight carbon atoms containing at least two double bonds between three contiguous carbon atoms, e.g. propa-1,2 dienyl, penta-1,2 dienyl, penta-2,3 dienyl, hexa-1,2-dienyl and the like. Where appropriate, an alkenyl group can be of either the (R)- or (S)-configuration. Preferred is propa-1,2- dienyl.

"Alkynyl" means a linear monovalent saturated hydrocarbon radical of two to eight carbon atoms, or a branched monovalent hydrocarbon radical of four to eight carbon atoms, containing at least one triple bond, e.g. ethynyl, propynyl and the like. Preferably, linear alkynyl groups contain two to six carbon atoms and more preferably are selected from ethynyl, prop-1-ynyl, prop-2-ynyl, but-1-ynyl, but-2-ynyl and but-3-ynyl. Preferably, branched alkynyl groups contain four to six carbon atoms and more preferably are selected from 1-methylprop-2-ynyl, 3-methylbut-1-ynyl, 1-methylbut-2-ynyl, 1-methylbut-3-ynyl and 1 -methylbut-3-ynyl.

"Alkylene" means a linear saturated divalent hydrocarbon radical of one to six carbon atoms or a branched saturated divalent hydrocarbon radical or three to six carbon atoms, e.g.

methylene, ethylene, propylene, 2-methylpropylene and the like. Preferred alkylene groups are the divalent radicals of the alkyl groups defined above.

"Alkenylene" means a linear divalent hydrocarbon radical of two to six carbon atoms or a branched divalent hydrocarbon radical of three to six carbon atoms, containing at least one double bond, e.g. ethenylene, propenylene and the like. Preferred alkenylene groups are the divalent radicals of the alkenyl groups defined above.

"Cyclyl" means a monovalent cyclic hydrocarbon radical of three to eight ring carbons, preferably three to six ring carbons, e.g. cyclopropyl, cyclohexyl and the like.

Cyclyl groups may be fully saturated or mono- or di-unsaturated. Preferably, cyclyl groups contain three to six ring carbons, more preferably they are selected from cyclopropyl, cyclobutyl, cyclopentyl and cyclohexyl. Mono-unsaturated cyclyl groups are preferably selected from cyclobutenyl, cyclopentenyl and cyclohexenyl.

"Heterocyclyl" means a cyclyl radical containing one, two or three ring heteroatoms selected from N, O or S(O)ₙ (where n is an integer from 0 to 2), the remaining ring atoms being carbon where one or two carbon atoms may optionally be replaced by a carbonyl group. Examples of such rings include, but are not limited to, oxirane, oxetane, tetrahydrofuran, tetrahydropyran, 1,3-dioxolane, 1,4-dioxane, aziridine, azetidine, pyrrolidine, piperidine, oxazinane, morpholine, thiomorpholine, imidazolidine, pyrazolidine and piperazine. More preferably, the heterocyclyl group contains three to five ring atoms including one O and/or one N ring atom.

"Aryl" means a monovalent moncyclic or bicyclic aromatic hydrocarbon radical of six to ten ring carbons atoms. Suitable aryl groups include phenyl and naphthyl, in particular, phenyl.

"Heteroaryl" means a monovalent monocyclic or bicyclic aromatic hydrocarbon radical of five to ten ring atoms, preferably five or six ring atoms, containing one, two, three or four ring heteroatoms selected, independently, from N, O or S, the remaining ring atoms being carbon. Examples of heteroaryl groups include, but are not limited to pyridyl, pyrimidinyl, pyrazolyl, thiazolyl, thiophenyl, isoazolyl, and tetrazolyl groups.

"Alkoxy" means a radical -OR, where R is optionally substituted alkyl, alkenyl or alkynyl or an optionally substituted cyclyl, heterocyclyl, aryl or heteroaryl group or an aralkyl or heteroaralkyl group. Preferably, alkoxy groups are selected from methoxy, ethoxy, 1 -methyl ethoxy, propoxy, 1-methylpropoxy and 2-methylpropoxy. More preferably alkoxy means methoxy or ethoxy.

"Halo" or "halogen" means fluoro, chloro, bromo or iodo, preferably chloro or fluoro.

"Haloalkyl" means alkyl as defined above substituted with one or more of the same or different halo atoms. Examples of haloalkyl groups include, but are not limited to fluoromethyl, difluoromethyl, trifluoromethyl, 2-fluoroethyl, 2-trifluoroethyl, 2-chloro-ethyl, 2-iodoethyl, 3-fluoropropyl, 3-chloropropyl, 2-trifluoro-l-chloroethyl and 1 -difluoro-2- difluoro-3-trifluoropropyl.

"Haloalkenyl" means alkenyl as defined above substituted with one or more of the same or different halo atoms. Examples of haloalkenyl groups include, but are not limited to 2-dibromoethenyl, 2-fluoro-2-bromoethenyl, 5-bromopent-3-enyl and 3 dichloroprop-2-enyl.

"Aralkyl" means a radical -R^{a}R^{b} where R^{a} is an alkylene or alkenylene group and R^{b} is an aryl group as defined above.

"Heteroaralkyl" means a radical -R^{a}R^{b} where R^{a} is an alkylene or alkenylene group and R^{b} is a heteroaryl group as defined above.

"Acyl" means -C(O)R, wherein R is hydrogen, optionally substituted alkyl, alkenyl or alkynyl or optionally substituted cyclyl, heterocyclyl, aryl or heteroaryl.

"Acyloxy" means a radical -OC(O)R where R is hydrogen, optionally substituted alkyl, alkenyl or alkynyl or optionally substituted cyclyl, heterocyclyl, aryl or heteroaryl.

The groups defined above, in particular, alkyl, alkenyl, alkynyl, cyclyl, heterocyclyl, aryl and heteroaryl groups, may be optionally substituted by one or more substituents independently selected from halogen, hydroxyl, cyano, alkyl (optionally substituted by
cyano), haloalkyl, alkenyl, haloalkenyl, alkynyl (optionally substituted by -C(O)OR), haloalkynyl, cyclyl (optionally substituted by cyano, halogen, hydroxyl or methyl), heterocyclyl, aryl (optionally substituted by halogen), heteroaryl, alkoxy (optionally substituted by alkoxy or acyl), -C(O)R, -C(O)OR, -SR, -S(O)R, -S(O)₂R, -S(O)NRR', -OS(O)NRR', -P(O)(OR)(OR'), -0(P)(O)(OR)(OR'), -NRR', -NRC(O)OR', -C(O)NRR', -O-N=CRR' or trialkylsilyl, wherein R and R' are, independently, hydrogen or alkyl, alkoxy, haloalkyl, alkenyl, haloalkenyl, alkynyl, cyclyl, heterocyclyl, aryl or heteroaryl. In particular, R and R' are, independently, hydrogen or alkyl (in particular, methyl or ethyl). Preferred optional substituents are alkoxy (in particular, methoxy or ethoxy), hydroxyl, cyano, halogen (in particular, fluoro, chloro or bromo), heterocyclyl (in particular, oxirane or tetrahydrofuran), heteroaryl (in particular, pyridyl), -C(O)OR (wherein R is hydrogen or alkyl (in particular, methyl or ethyl)) and trialkylsilyl (in particular, trimethylsilyl).

The compounds of formula (I) may exist in different geometric or optical isomeric forms or in different tautomeric forms. One or more centres of chirality may be present, in which case compounds of the formula (I) may be present as pure enantiomers, mixtures of enantiomers, pure diastereomers or mixtures of diastereomers. There may be double bonds present in the molecule, such as C=C or C=N bonds, in which case compounds of formula (I) may exist as single isomers of mixtures of isomers. Centres of tautomerisation may be present. This invention covers all such isomers and tautomers and mixtures thereof in all proportions as well as isotopic forms such as deuterated compounds.

Suitable salts of the compounds of formula (I) include acid addition salts such as those with an inorganic acid such as hydrochloric, hydrobromic, sulfuric, nitric or phosphoric acid, or an organic carboxylic acid such as oxalic, tartaric, lactic, butyric, toluic, hexanoic or phthalic acid, or a sulphonic acid such as methane, benzene or toluene sulphonic acid. Other examples of organic carboxylic acids include haloacids such as trifiuoroacetic acid.

N-oxides are oxidised forms of tertiary amines or oxidised forms of nitrogen containing heteroaromatic compounds. They are described in many books for example in "Heterocyclic N-oxides" by Angelo Albini and Silvio Pietra, CRC Press, Boca Raton, Florida, 1991.

In particularly preferred embodiments of the invention, the preferred groups for X¹ and X² and R¹ to R²⁵, in any combination thereof, are as set out below.

Preferably, X¹ is CH.

Preferably, X² is CR⁵. More preferably, X² is CH.

Preferably, R¹ is hydrogen, halogen, cyano, optionally substituted C₁₋₆ alkyl, C₂₋₆ alkenyl or C₂₋₆ alkynyl, optionally substituted aryl or -C(O)R¹⁰, wherein the optional substituents in all cases are as defined above and, more preferably, are selected from hydroxyl, alkoxy, halogen or trialkylsilyl. More preferably, R¹ is hydrogen, halogen, cyano or optionally substituted C₁₋₆ alkyl or C₂₋₆ alkynyl (in particular, the C₂₋₆ alkynyl is 2- trimethylsilyl-ethynyl). Even more preferably, R¹ is hydrogen, chloro, bromo, cyano or methyl. Most preferably, R¹ is hydrogen, chloro or methyl.

Preferably, R² is hydrogen or C₁₋₆ alkyl. More preferably, R² is hydrogen or methyl. Most preferably, R² is hydrogen.

Preferably, R³ is hydrogen, hydroxyl, -C(O)R¹², -OR¹², -C(O)OR¹², -OC(O)R¹², - S(O)₂R¹², optionally substituted C₁₋₆ alkyl, C₂₋₆ alkenyl, C₃₋₆ allenyl, C₂₋₆ alkynyl or optionally substituted saturated cyclyl, wherein the optional substitutents in all cases are as defined above and, more preferably, are selected from cyano, halogen, hydroxyl, C₁₋₄ alkyl, C₂₋₄ alkenyl, alkoxy (optionally substituted by alkoxy or acyl), cyclyl, heterocyclyl, aryl, heteroaryl, -NH₂, trialkylsilyl, -C(O)R or -C(O)OR (wherein R is hydrogen, methyl or ethyl). More preferably, R³ is hydrogen, -OR¹² or optionally substituted C₁₋₆ alkyl, C₂₋₄ alkenyl, C₃₋₄ allenyl or C₂₋₄ alkynyl. Most preferably, R³ is hydrogen, cyanomethyl, aminoethyl, aminopropyl, prop-2-enyl, prop-2-ynyl, propa-1,2-dienyl, methoxymethyl, 2-fluoromethyl, - OCH₂C≡CH, -OCH₂OCH₃, -OCH₂CN, -OCH(CH₃)CN. Preferably, R⁴ is hydrogen, halogen, optionally substituted C₂₋₆ alkynyl or optionally substituted aryl or heteroaryl, wherein the optional substituents are as defined above and, more preferably, are selected from hydroxyl, halogen (in particular, fluoro or chloro), haloalkyl, acyl or C₁₋₄ alkyl (in particular, methyl). More preferably, R⁴ is optionally substituted phenyl or optionally substituted heteroaryl. Even more preferably, R⁴ is
optionally substituted phenyl. Even more preferably, R⁴ is phenyl, 3-methylphenyl, 3- trifluoromethylphenyl, 4-chlorophenyl, 2-fluorophenyl, 3-fluorophenyl, 4-fluorophenyl, 2,5- difluorophenyl or 3 -methyl-4- fluorophenyl. Most preferably, R⁴ is phenyl or 4-fluorophenyl.

Preferably R⁵ is hydrogen, halogen, optionally substituted C₁₋₆ alkyl, C₂₋₆ alkenyl or
C₂₋₆ alkynyl, or forms an optionally substituted aryl, heteraryl, cyclyl or hetercycyl ring with R⁶, wherein the optional substituents in all cases are as defined above and, more preferably, are selected from halogen, cyano, hydroxyl, haloalkyl or C₁₋₄ alkyl. Preferably, the ring formed with R⁶ is a 5 or 6 membered heterocycle. More preferably, R⁵ is hydrogen or halogen. Most preferably, R⁵ is hydrogen.

Preferably R⁶ is hydrogen, chloro, -C(O)OR¹⁸, -NR¹⁸R¹⁹, -N=CR²⁰ or forms an optionally substituted aryl, heteroaryl, cyclyl or heterocycyl ring with R⁵ as defined above. More preferably, R⁶ is hydrogen or -NR¹⁸R¹⁹. More preferably, R⁶ is -NHR¹⁹. More preferably, R⁶ is -NHC(O)R²³.

Preferably R⁷ and R⁸ are, independently, hydrogen, hydroxyl, cyano, -NR²¹R²² or optionally substituted C₁₋₆ alkyl, wherein the optional substituents are as defined above and, more preferably, are selected from halogen, cyano, hydroxyl or haloalkyl. More preferably, R⁷ and R⁸ are, independently hydrogen, hydroxyl or -NR²¹R²². Most preferably, R⁷ and R⁸ are both hydrogen.

Preferably, R¹⁰, R¹¹, R¹⁴, R¹⁵, R¹⁶ and R¹⁷ are, independently, hydrogen or optionally substituted C₁₋₆ alkyl, C₂₋₆ alkenyl or C₂₋₆ alkynyl, wherein the optional substituents are as defined above and, more preferably, are hydroxyl, halogen, cyano or alkoxy. More preferably R¹⁰, R¹¹, R¹⁴, R¹⁵, R¹⁶ and R¹⁷ are, independently, hydrogen or optionally substituted C₁₋₃ alkyl. Most preferably, R¹⁰, R¹¹, R¹⁴, R¹⁵, R¹⁶ and R¹⁷ are, independently, hydrogen, methyl or ethyl.

Preferably R¹² and R¹³ are, independently, optionally substituted C₁₋₆ alkyl, C₂₋₆ alkenyl or C₂₋₆ alkynyl or optionally substituted C₃₋₆ cyclyl, wherein the optional substituents in all cases are as defined above and, more preferably are hydroxyl, halogen, cyano, alkoxy, cyclyl (optionally substituted with hydroxyl or methyl), -C(O)OR, -OS(O)NRR' (wherein R and R' are, independently, hydrogen, alkyl, alkenyl or alkynyl). More preferably, R¹² and

R¹³ are, independently, optionally substituted C₁₋₄ alkyl, C₂₋₄ alkenyl or C₂₋₄ alkynyl. Most preferably, R¹² and R¹³ are, independently, cyanomethyl, prop-2-enyl or prop-2-ynyl.

Preferably R¹⁸ is hydrogen, optionally substituted C₁₋₆ alkyl, C₂₋₆ alkenyl or C₂₋₆ alkynyl, -C(O)R²³, -C(O)OR²³, -S(O)₂R²³ or -C(O)NR²³R²⁴ or forms an optionally substituted heterocyclyl ring with R¹⁹, wherein the optional substituents in all cases are as defined above and, more preferably are selected from hydroxyl, cyano, halogen or alkoxy. More preferably, R¹⁸ is hydrogen, C₁₋₄ substituted alkyl, C₂₋₄ alkenyl, or C₂₋₄ alkynyl. Preferably the C₁₋₄ alkyl group is ethyl or *iso*-propyl. Preferably, the C₂₋₄ alkenyl group is propen-2-enyl. Preferably, the C₂₋₄ alkynyl group is prop-2ynyl or but-2-ynyl. Most preferably, R¹⁸ is hydrogen.

Preferably R¹⁹ is hydrogen, -C(S)R²³, -C(O)R²³, -C(O)OR²³, -S(O)₂R²³ or -C(O)NR²³R²⁴ optionally substituted C₁₋₆ alkyl, C₂₋₆ alkenyl or C₂₋₆ alkynyl, optionally substituted aryl, heteroaryl, cyclyl or heterocyclyl or forms an optionally substituted heterocyclyl ring with R¹⁸, wherein the optional substituents in all case are as defined above and, more preferably, are selected from hydroxyl, cyano, halogen, alkoxy, cyclyl or heterocyclyl. More preferably, R¹⁹ is hydrogen, -C(S)R²³, -C(O)R²³ or -C(O)OR²³ or optionally substituted C₁₋₄ alkyl. Preferably, the optionally substituted C₁₋₄ alkyl is *iso*-butyl. Most preferably, R¹⁹ is hydrogen, -C(O)R²³ or -C(O)OR²³.

Preferably, R²⁰ is -NR²¹R²²_{.}

Preferably, R²¹ and R²² are, independently, hydrogen, optionally substituted C₁₋₄ alkyl or -C(O)OR²⁵, wherein the optional substituents are as defined above and, more preferably, are selected from hydroxyl, cyano, halogen, alkoxy, acyl, cyclyl or heterocyclyl. More preferably, R²¹ and R²² are, independently, hydrogen or optionally substituted C₁₋₄ alkyl. Most preferably, R²¹ and R²² are, independently, hydrogen, methyl or ethyl.

Preferably R²³ and R²⁴ are, independently, hydrogen, hydroxyl, optionally substituted C₁₋₆ alkyl, C₂₋₆ alkenyl or C₂₋₆ alkynyl or optionally substituted cyclyl or aryl, wherein the optional substituents in all cases are as defined above and, more preferably, are hydroxyl, halogen, cyano, C₁₋₄ alkyl, alkoxy, haloalkenyl, cyclyl or -C(O)OR (wherein R is cyclyl). Preferably, the aryl group is optionally substituted phenyl. More preferably, the aryl group is 3-halophenyl or 4-halophenyl. More preferably, R²³ and R²⁴ are, independently, hydrogen, optionally substituted C₁₋₆ alkyl or C₂₋₆ alkenyl or an optionally substituted saturated or mono-unsaturated cyclyl group. Even more preferably, R²³ and R²⁴ are, independently, optionally substituted C₁₋₆ alkyl or an optionally substituted C₃₋₆ saturated cyclyl group. Preferably the optionally substituted C₁₋₆ alkyl is methyl, ethyl or *iso*-propyl. Preferably, the C₃₋₆ saturated cyclyl group is a cyclopropyl or cyclobutyl group, which may be substituted with one or more substituents being selected from cyano, halogen (preferably fluoro), C₁₋₄ alkyl (preferably methyl) or haloalkenyl.

Preferably, R²⁵ is C₁₋₄ alkyl. More preferably, R²⁵ is methyl, ethyl, propyl or 2- dimethylethyl.

In a particularly preferred embodiment, when R³ is hydrogen, R⁶ is other than hydrogen. More preferably, R³ is hydrogen and R⁶ is -NR¹⁸R¹⁹. More preferably, R³ is hydrogen and R⁶ is -NHR¹⁹. More preferably, R³ is hydrogen and R⁶ is -NHC(O)R²³.

In an alternative preferred embodiment, R⁶ is hydrogen and R³ is other than hydrogen. More preferably, R⁶ is hydrogen and R³ is -OR¹² or optionally substituted C₁₋₆ alkyl, C₂₋₄ alkenyl, C₃₋₄ allenyl or C₂₋₄ alkynyl. Most preferably, R⁶ is hydrogen and R³ is cyanomethyl, aminoethyl, aminopropyl, prop-2-enyl, prop-2-ynyl, propa-1,2-dienyl, methoxymethyl, 2-fluoromethyl, -OCH₂ C≡CH, -OCH₂OCH₃, -OCH₂CN, -OCH(CH₃)CN.

In a particular embodiment, the method of the invention utilises a compound of formula (Ia) 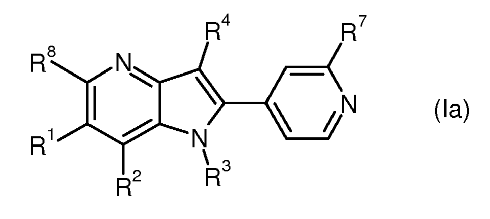 wherein R¹, R², R³, R⁴, R⁷ and R⁸ are as defined above and, preferably:
- R¹: is hydrogen, halogen, cyano, optionally substituted C₁₋₆ alkyl (in particular, optionally substituted C₁₋₄ alkyl and, most particularly, optionally substituted methyl or ethyl, wherein the optional substituent is as defined above and more preferably is hydroxyl, e.g. 1- hydroxylethyl) or -C(O)R¹⁰ and R¹⁰ is hydrogen or C₁₋₄ alkyl;
- R², R⁷ and R⁸: are, independently, hydrogen, halogen or C₁₋₄ alkyl;
- R³: is hydrogen, hydroxyl, cyano, optionally substituted C₁₋₆ alkyl, C₂₋₆ alkenyl, C₃₋₆ allenyl or C₂₋₆ alkynyl, -NR¹²R¹³, -OR¹² or -C(O)R¹², wherein:

(a) the optional substituents on the alkyl, alkenyl and alkynyl groups are as defined above and, more preferably, are independently selected from halo, cyano, hydroxyl, alkoxy (optionally substituted by alkoxy or acyl), C₁₋₄ alkyl, C₂₋₄ alkenyl, cyclyl, heterocyclyl, heteroaryl, -C(O)R, -C(O)OR and -SR, wherein R is hydrogen, C₁₋₄ alkyl, C₂₋₄ alkenyl or C₂₋₄ alkynyl, and
(b) R¹² is optionally substituted alkyl, alkenyl, alkynyl or cyclyl, the optional substituents being as defined above and, more preferably, halo, cyano, hydroxyl, alkoxy, cyclyl, heterocyclyl, -C(O)R, -C(O)OR or -OS(O)NRR', wherein R and R' are, independently hydrogen or alkyl,
and R⁴ is optionally substituted aryl (in particular, phenyl or naphthyl), the optional substituents being as defined above and, more preferably halogen or C₁₋₄ alkyl.

More preferably, R¹ is hydrogen, halo or optionally substituted C₁₋₄ alkyl, wherein the optional substituent is preferably hydroxyl; R¹⁰ is methyl or ethyl; R², R⁷ and R⁸ are, independently, hydrogen, methyl, ethyl or chloro; R³ is hydrogen, -OR¹² or optionally substituted C₁₋₄ alkyl, C₂₋₄ alkenyl or C₂₋₄ alkynyl; and R⁴ is phenyl, which is optionally substituted by at least one substituent selected from halogen and C₁₋₄ alkyl (in particular, methyl).

Even more preferably, R¹ is hydrogen, chloro or methyl; R², R⁷ and R⁸ are each hydrogen; R³ is hydrogen, cyanomethyl, prop-2-enyl or prop-2-ynyl; and R⁴ is phenyl, 2- fluorophenyl, 3-fluorophenyl, 4-fluorophenyl, 4-chlorophenyl, 3-methylphenyl or 3-methyl- 4-fluorophenyl and most preferably is 4-fluorophenyl.

In a particular embodiment, the method of the invention utilises a compound of formula (Ib): 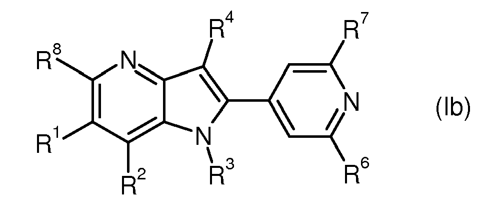 wherein R¹, R², R³, R⁴, R⁶, R⁷ and R⁸ are as defined above and, preferably:
- R¹: is hydrogen, halogen, optionally substituted C₁₋₆ alkyl or -C(O)R¹⁰ and R¹⁰ is hydrogen or C₁₋₄ alkyl;
- R²: is hydrogen or C₁₋₄ alkyl;
- R³: is hydrogen, hydroxyl, optionally substituted C₁₋₆ alkyl, C₂₋₆ alkenyl or C₂₋₆ alkynyl, -C(O)R¹² or -OR¹² and R¹² is optionally substituted C₁₋₄ alkyl or cyclyl, the optional substituents in all cases being as defined above and, more preferably, halogen, cyano, hydroxyl, alkoxy, cyclyl, heterocyclyl, -NH₂, trialkylsilyl or C(O)OR, wherein R is hydrogen, C₁₋₄ alkyl, C₂₋₄ alkenyl or C₂₋₄ alkynyl;
- R⁴: is optionally substituted aryl, the optional substituents being as defined above and, more preferably halogen or C₁₋₄ alkyl;
- R⁶: is halogen or -NR¹⁸R¹⁹ and

(i) R¹⁸ is hydrogen, -C(O)R²³, -C(O)OR²³ or optionally substituted C₁₋₄ alkyl, C₂₋₄ alkenyl or C₂₋₄ alkynyl and R²³ is optionally substituted Ci-₄ alkyl and
(ii) R¹⁹ is hydrogen, optionally substituted C₁₋₄ alkyl, C₂₋₄ alkenyl or C₂₋₄ alkynyl, - C(S)R²³ -C(O)R²³ or -C(O)OR²³ and R²³ is hydrogen, optionally substituted C₁₋₄ alkyl, C₂₋₄ alkenyl, C₂₋₄ alkynyl or C₃₋₆ cyclyl;

- R⁷: is hydrogen, halogen or C₁₋₄ alkyl; and
- R⁸: is hydrogen, halogen, C₁₋₄ alkyl or NR²¹R²² and R²¹ and R²² are, independently, hydrogen or C₁₋₄ alkyl.

More preferably, R¹ is hydrogen, halo or optionally substituted C₁₋₄ alkyl; R² is hydrogen or methyl; R³ is hydrogen, optionally substituted C₁₋₄ alkyl, C₂₋₄ alkenyl or C₂₋₄ alkynyl or -OR¹²; R⁴ is phenyl, which is optionally substituted by at least one substituent selected from halogen and C₁₋₄ alkyl; R⁶ is halogen or -NR¹⁸R¹⁹ and R¹⁸ is hydrogen, prop-2- enyl or prop-2-ynyl and R¹⁹ is -C(O)R²³ and R²³ is hydrogen, methyl, ethyl, iso-propyl, 1- methylethyl, 1 -methylpropyl, 2-dimethylethyl, propyl, 1-methylethenyl, 2-methylprop-1- enyl, but-3-enyl, cyclopropyl, 1-methylcyclopropyl, 1-fluorocyclopropyl or cyclobutyl; R⁷ is hydrogen, chloro, fluoro or methyl; and R⁸ is hydrogen, chloro, methyl or 2-methoxy-1- ethylamino.

Even more preferably, R¹ is hydrogen, chloro or methyl; R² hydrogen or methyl; R³ is hydrogen, cyanomethyl, prop-2-enyl or prop-2-ynyl; R⁴ is 2-fluorophenyl, 3-fluorophenyl, 4-fluorophenyl, 4-chlorophenyl, 3-methylphenyl or 3-methyl-4-fluorophenyl and most preferably is 4-fluorophenyl; R⁶ is -NR¹⁸R¹⁹ and R¹⁸ is hydrogen and R¹⁹ is -C(O)R²³ and R²³ is methyl, ethyl, iso-propyl, cyclopropyl, cyclobutyl or 1-methylcyclopropyl; R⁷ hydrogen; and R⁸ is hydrogen, chloro or methyl.

In a particular embodiment, the method of the invention utilises a compound of formula (Ic) 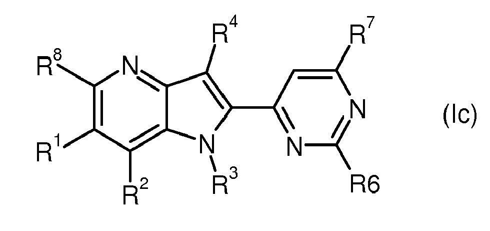 wherein R¹, R², R³, R⁴, R⁶, R⁷ and R⁸ are as defined above and, preferably:
- R¹, R², R⁷ and R⁸: are, independently, hydrogen, halogen or C₁₋₄ alkyl; R³ is hydrogen or optionally substituted C₁₋₆ alkyl, C₂₋₆ alkenyl or C₂₋₆ alkynyl, the optional substituents being as defined above and, more preferably, halogen or alkoxy; R⁴ is optionally substituted aryl, the optional substituents being as defined above and, more preferably, halogen; and R⁶ is hydrogen, -SR¹⁸ or -NR¹⁸R¹⁹ wherein R¹⁸ is hydrogen or C₁₋₄ alkyl and R¹⁹ is optionally substituted alkyl, -C(S)R²³ or -C(O)R²³ and R²³ is hydrogen or C₁₋₄ alkyl.

More preferably R¹, R², R⁷ and R⁸ are, independently, hydrogen, methyl, ethyl or chloro; R³ is hydrogen, haloalkyl, alkoxyalkyl, alkenyl or alkynyl; R⁴ is optionally substituted phenyl, the optional substituent being halogen; and R⁶ is hydrogen or -NR¹⁸R¹⁹ wherein R¹⁸ is hydrogen and R¹⁹ is 2-methoxy-1-methylethyl, -C(S)R²³ or -C(O)R²³ and R²³ is C₁₋₄ alkyl.

Even more preferably, R¹, R², R⁷ and R⁸ are, independently, hydrogen; R³ is hydrogen, 2-fluoroethyl, methoxymethyl, prop-1,2-diene or prop-2-ynyl; R⁴ is fluorophenyl (in particular, 4-fluorophenyl); and R⁶ is -NR¹⁸R¹⁹ wherein R¹⁸ is hydrogen and R¹⁹ is - C(O)R²³ and R²³ methyl, ethyl, 1-methylethyl, 1-dimethylethyl or 3-methylpropyl.

More particularly, compounds for use in the present invention are shown in Table 1 (compounds of formula (Ia)), Table 2 (compounds of formula (Ib)) and Table 3 (compounds of formula (Ic)) below:
The process of preparing the compounds accordings to formula (I) is disclosed in WO-A 2008/132434.

As indicated above, it has now been found that the compounds of formula I are useful in reducing mycotoxin contamination when they are applied to a plant and/or any plant material and/or plant propagation material in an effective amount.

In a particular embodiment the fungi producing the mycotoxins are selected from the group of the following species: F. acuminatum, F. crookwellense, F., verticillioides, F. culmorum, F. avenaceum, F. equiseti, F. moniliforme, F. graminearum (Gibberella zeae), F. lateritium, F. poae, F. sambucinum (G. pulicaris), F. proliferatum, F. subglutinans and F. sporotrichioides, Aspergillus flavus, most strains of Aspergillus parasiticus and Aspergillus nomius, A. ochraceus, A. carbonarius or P. viridicatum.

In a very particular embodiment the fungi producing the mycotoxins are selected from the group of the following species: F., verticillioides, F. culmorum, F. moniliforme, *F.* graminearum (Gibberella zeae), F. proliferatum, Aspergillus flavus, most strains of Aspergillus parasiticus and Apergillus nomius, A. ochraceus, A. carbonarius.

In a very particular embodiment the fungi producing the mycotoxins are selected from the group of the following species: F. verticillioides, F. proliferatum, F. graminearum (Gibberella zeae), Aspergillus flavus, and Aspergillus parasiticus.

In a very particular embodiment the fungi producing the mycotoxins are selected from the group of the following species: F., verticillioides, F. proliferatum, F. graminearum.

In a very particular embodiment the fungi producing the mycotoxins are selected from the group of the following species: Aspergillus flavus, and Aspergillus parasiticus.

In a particular embodiment the mycotoxins are selected from the following group: aflatoxins B1, B2, G1 and G2, ochratoxin A, B, C as well as T-2 toxin, HT-2 toxin, isotrichodermol, DAS, 3-deacetylcalonectrin, 3,15-dideacetylcalonectrin, scirpentriol, neosolaniol; zearalenone, 15-acetyldeoxynivalenol, nivalenol, 4-acetylnivalenol (fusarenone-X), 4,15-diacetylnivalenol, 4,7,15-acetylnivalenol, and deoxynivalenol (hereinafter "DON") and their various acetylated derivatives as well as fumonisins of the B-type as FB1, FB2, FB3.

In a very particular embodiment the mycotoxins are selected from the following group: aflatoxins B1, B2, G1 and G2, zearalenone, deoxynivalenol (hereinafter "DON") and their various acetylated derivatives as well as fumonisins of the B-type as FB1, FB2, FB3.

In a very particular embodiment the mycotoxins are selected from the following group: aflatoxins B1, B2, G1 and G2.

In a very particular embodiment the mycotoxins are selected from the following group: aflatoxins B1.

In a very particular embodiment the mycotoxins are selected from the following group: zearalenone, deoxynivalenol (hereinafter "DON") and their various acetylated derivatives.

In a very particular embodiment the mycotoxins are selected from the following group: fumonisins of the B-type as FB1, FB2, FB3.

In a particular embodiment of the invention plant or plant material before and/or after harvest and/or during storage has at least 10 % less mycotoxin, more preferable at least 20 % less mycotoxins, more preferable at least 40 % less mycotoxins, more preferable at least 50 % less mycotoxins more preferable at least 80 % less mycotoxin contamination than plant or plant material before and/or after harvest and/or during storage which has not been treated.

In a particular embodiment of the invention plant or plant material before harvest has at least 10 % less aflatoxins, more preferable at least 20 % aflatoxin, more preferable at least 40 % aflatoxins, more preferable at least 50 % aflatoxins, more preferable at least 80 % aflatoxin contamination than plant or plant material before harvest which has not been treated.

In a particular embodiment of the invention plant or plant material after harvest has at least 10 % less fumonisins, more preferable at least 20 % fumonisins, more preferable at least 40 % fumonisins, more preferable at least 50 % fumonisins, more preferable at least 80 % fumonisin contamination than plant or plant material after harvest which has not been treated.

In a particular embodiment of the invention plant or plant material during storage has at least 10 % less DON, more preferable at least 20 % DON, more preferable at least 40 % DON, more preferable at least 50 % DON, more preferable at least 80 % DON contamination than plant or plant during storage which has not been treated.

According to the invention all plants and plant material can be treated. By plants is meant all plants and plant populations such as desirable and undesirable wild plants, cultivars (including naturally occurring cultivars) and plant varieties (whether or not protectable by plant variety or plant breeder's rights). Cultivars and plant varieties can be plants obtained by conventional propagation and breeding methods which can be assisted or supplemented by one or more biotechnological methods such as by use of double haploids, protoplast fusion, random and directed mutagenesis, molecular or genetic markers or by bioengineering and genetic engineering methods including transgenic plants.

By plant material is meant all above ground and below ground parts and organs of plants such as shoot, leaf, flower, blossom and root, whereby for example leaves, needles, stems, branches, blossoms, fruiting bodies, fruits and seed as well as roots, corms and rhizomes are listed.

In a particular embodiment the plant material to be treated are leaves, shoots, flowers, grains, seeds.

In a particular embodiment the plant material to be treated are leaves, shoots, flowers, grains, seeds.

By 'plant propagation material' is meant generative and vegetative parts of a plant including seeds of all kinds (fruit, tubers, bulbs, grains etc), runners, pods, fruiting bodies, roots, rhizomes, cuttings, corms, cut shoots and the like.

Plant propagation material may also include plants and young plants which are to be transplanted after germination or after emergence from the soil.

Among the plants that can be protected by the method according to the invention, mention may be made of major field crops like corn, soybean, cotton, *Brassica* oilseeds such as *Brassica napus* (e.g. canola), *Brassica rapa, B. juncea* (e.g. mustard) and *Brassica carinata,* rice, wheat, sugarbeet, sugarcane, oats, rye, barley, millet, triticale, flax, vine and various fruits and vegetables of various botanical taxa such as *Rosaceae sp.* (for instance pip fruit such as apples and pears, but also stone fruit such as apricots, cherries, almonds and peaches, berry fruits such as strawberries), *Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp.* (for instance banana trees and plantings), *Rubiaceae sp.* (for instance coffee), *Theaceae sp., Sterculiceae sp., Rutaceae sp.* (for instance lemons, oranges and grapefruit) ; *Solanaceae sp.* (for instance tomatoes, potatoes, peppers, eggplant), *Liliaceae sp*., Compositiae *sp*. (for instance lettuce, artichoke and chicory - including root chicory, endive or common chicory), *Umbelliferae sp.* (for instance carrot, parsley, celery and celeriac), *Cucurbitaceae sp.* (for instance cucumber - including pickling cucumber, squash, watermelon, gourds and melons), *Alliaceae* sp. (for instance onions and leek), Cruciferae *sp*. (for instance white cabbage, red cabbage, broccoli, cauliflower, brussel sprouts, pak choi, kohlrabi, radish, horseradish, cress, Chinese cabbage), Leguminosae *sp*. (for instance peanuts, peas and beans beans - such as climbing beans and broad beans), *Chenopodiaceae sp.* (for instance mangold, spinach beet, spinach, beetroots), *Malvaceae* (for instance okra), *Asparagaceae* (for instance asparagus); horticultural and forest crops; ornamental plants; as well as genetically modified homologues of these crops.

In a particular embodiment crops from the family of Poaceae which is comprised of wheat, oat, barley, rye, triticale, millet, corn, maize can be protected by the method of the invention.

The methods, compounds and compositions of the present invention are suitable for reducing mycotoxin contamination on a number of plants and their propagation material including, but not limited to the following target crops: vine, flaxcotton,cereals (wheat, barley, rye, oats, millet, triticale, maize (including field corn, pop corn and sweet corn), rice, sorghum and related crops); beet (sugar beet and fodder beet); sugar beet, sugar cane, leguminous plants (beans, lentils, peas, soybeans); oil plants (rape, mustard, sunflowers), *Brassica* oilseeds such as *Brassica napus* (e.g. canola), *Brassica rapa, B. juncea* (e.g. mustard) and *Brassica carinata*; cucumber plants (marrows, cucumbers, melons); fibre plants (cotton, flax, hemp, jute); vegetables (spinach, lettuce, asparagus, cabbages, carrots, eggplants, onions, pepper, tomatoes, potatoes, paprika, okra); plantation crops (bananas, fruit trees, rubber trees, tree nurseries), ornamentals (flowers, shrubs, broad-leaved trees and evergreens, such as conifers); as well as other plants such as vines, bushberries (such as blueberries), caneberries, cranberries, peppermint, rhubarb, spearmint, sugar cane and turf grasses including, but not limited to, cool-season turf grasses (for example, bluegrasses (Poa L.), such as Kentucky bluegrass (Poa pratensis L.), rough bluegrass (Poa trivialis L.), Canada bluegrass (Poa compressa L.) and annual bluegrass (Poa annua L.); bentgrasses (Agrostis L.), such as creeping bentgrass (Agrostis palustris Huds.), colonial bentgrass (Agrostis tenius Sibth.), velvet bentgrass (Agrostis canina L.) and redtop (Agrostis alba L.); fescues (Festuca L.), such as tall fescue (Festuca arundinacea Schreb.), meadow fescue (Festuca elatior L.) and fine fescues such as creeping red fescue (Festuca rubra L.), chewings fescue (Festuca rubra var. commutata Gaud.), sheep fescue (Festuca ovina L.) and hard fescue (Festuca longifolia); and ryegrasses (Lolium L.), such as perennial ryegrass (Lolium perenne L.) and annual (Italian) ryegrass (Lolium multiflorum Lam.)) and warm-season turf grasses (for example, Bermudagrasses (Cynodon L. C. Rich), including hybrid and common Bermudagrass; Zoysiagrasses (Zoysia Willd.), St. Augustinegrass (Stenotaphrum secundatum (Walt.) Kuntze); and centipedegrass (Eremochloa ophiuroides (Munro.) Hack.)); various fruits and vegetables of various botanical taxa such as *Rosaceae sp.* (for instance pip fruit such as apples and pears, but also stone fruit such as apricots, cherries, almonds and peaches, berry fruits such as strawberries), *Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp.* (for instance banana trees and plantings), *Rubiaceae sp.* (for instance coffee), *Theaceae sp., Sterculiceae sp., Rutaceae sp.* (for instance lemons, oranges and grapefruit) ; *Solanaceae sp.* (for instance tomatoes, potatoes, peppers, eggplant), *Liliaceae sp.,* Compositiae *sp*. (for instance lettuce, artichoke and chicory - including root chicory, endive or common chicory), *Umbelliferae sp.* (for instance carrot, parsley, celery and celeriac), *Cucurbitaceae sp.* (for instance cucumber - including pickling cucumber, squash, watermelon, gourds and melons), *Alliaceae* sp. (for instance onions and leek), Cruciferae *sp*. (for instance white cabbage, red cabbage, broccoli, cauliflower, brussel sprouts, pak choi, kohlrabi, radish, horseradish, cress, Chinese cabbage), Leguminosae *sp*. (for instance peanuts, peas and beans beans - such as climbing beans and broad beans), *Chenopodiaceae sp.* (for instance mangold, spinach beet, spinach, beetroots), *Malvaceae* (for instance okra), *Asparagaceae* (for instance asparagus); horticultural and forest crops; ornamental plants; as well as genetically modified homologues of these crops.

The method of treatment according to the invention can be used in the treatment of genetically modified organisms (GMOs), e.g. plants or seeds. Genetically modified plants (or transgenic plants) are plants in which a heterologous gene has been stably integrated into the genome. The expression "heterologous gene" essentially means a gene which is provided or assembled outside the plant and when introduced in the nuclear, chloroplastic or mitochondrial genome gives the transformed plant new or improved agronomic or other properties by expressing a protein or polypeptide of interest or by downregulating or silencing other gene(s) which are present in the plant (using for example, antisense technology, co suppression technology or RNA interference - RNAi - technology). A heterologous gene that is located in the genome is also called a transgene. A transgene that is defined by its particular location in the plant genome is called a transformation or transgenic event.

Depending on the plant species or plant cultivars, their location and growth conditions (soils, climate, vegetation period, diet), the treatment according to the invention may also result in superadditive ("synergistic") effects. Thus, for example, reduced application rates and/or a widening of the activity spectrum and/or an increase in the activity of the active compounds and compositions which can be used according to the invention, better plant growth, increased tolerance to high or low temperatures, increased tolerance to drought or to water or soil salt content, increased flowering performance, easier harvesting, accelerated maturation, higher harvest yields, bigger fruits, larger plant height, greener leaf color, earlier flowering, higher quality and/or a higher nutritional value of the harvested products, higher sugar concentration within the fruits, better storage stability and/or processability of the harvested products are possible, which exceed the effects which were actually to be expected.

At certain application rates, the active compound combinations according to the invention may also have a strengthening effect in plants. Accordingly, they are also suitable for mobilizing the defense system of the plant against attack by unwanted phytopathogenic fungi and/ or microorganisms and/or viruses. This may, if appropriate, be one of the reasons of the enhanced activity of the combinations according to the invention, for example against fungi. Plant-strengthening (resistance-inducing) substances are to be understood as meaning, in the present context, those substances or combinations of substances which are capable of stimulating the defense system of plants in such a way that, when subsequently inoculated with unwanted phytopathogenic fungi and/ or microorganisms and/or viruses, the treated plants display a substantial degree of resistance to these unwanted phytopathogenic fungi and/ or microorganisms and/or viruses. In the present case, unwanted phytopathogenic fungi and/ or microorganisms and/or viruses are to be understood as meaning phytopathogenic fungi, bacteria and viruses. Thus, the substances according to the invention can be employed for protecting plants against attack by the abovementioned pathogens within a certain period of time after the treatment. The period of time within which protection is effected generally extends from 1 to 10 days, preferably 1 to 7 days, after the treatment of the plants with the active compounds.

Plants and plant cultivars which are preferably to be treated according to the invention include all plants which have genetic material which impart particularly advantageous, useful traits to these plants (whether obtained by breeding and/or biotechnological means).

Plants and plant cultivars which are also preferably to be treated according to the invention are resistant against one or more biotic stresses, i.e. said plants show a better defense against animal and microbial pests, such as against nematodes, insects, mites, phytopathogenic fungi, bacteria, viruses and/or viroids.

Plants and plant cultivars which may also be treated according to the invention are those plants which are resistant to one or more abiotic stresses. Abiotic stress conditions may include, for example, drought, cold temperature exposure, heat exposure, osmotic stress, flooding, increased soil salinity, increased mineral exposure, ozon exposure, high light exposure, limited availability of nitrogen nutrients, limited availability of phosphorus nutrients, shade avoidance.

Plants and plant cultivars which may also be treated according to the invention, are those plants characterized by enhanced yield characteristics. Increased yield in said plants can be the result of, for example, improved plant physiology, growth and development, such as water use efficiency, water retention efficiency, improved nitrogen use, enhanced carbon assimilation, improved photosynthesis, increased germination efficiency and accelerated maturation. Yield can furthermore be affected by improved plant architecture (under stress and non-stress conditions), including but not limited to, early flowering, flowering control for hybrid seed production, seedling vigor, plant size, internode number and distance, root growth, seed size, fruit size, pod size, pod or ear number, seed number per pod or ear, seed mass, enhanced seed filling, reduced seed dispersal, reduced pod dehiscence and lodging resistance. Further yield traits include seed composition, such as carbohydrate content, protein content, oil content and composition, nutritional value, reduction in anti-nutritional compounds, improved processability and better storage stability.

Plants that may be treated according to the invention are hybrid plants that already express the characteristic of heterosis or hybrid vigor which results in generally higher yield, vigor, health and resistance towards biotic and abiotic stress factors. Such plants are typically made by crossing an inbred male-sterile parent line (the female parent) with another inbred male-fertile parent line (the male parent). Hybrid seed is typically harvested from the male sterile plants and sold to growers. Male sterile plants can sometimes (e.g. in corn) be produced by detasseling, i.e. the mechanical removal of the male reproductive organs (or males flowers) but, more typically, male sterility is the result of genetic determinants in the plant genome. In that case, and especially when seed is the desired product to be harvested from the hybrid plants it is typically useful to ensure that male fertility in the hybrid plants is fully restored. This can be accomplished by ensuring that the male parents have appropriate fertility restorer genes which are capable of restoring the male fertility in hybrid plants that contain the genetic determinants responsible for male-sterility. Genetic determinants for male sterility may be located in the cytoplasm. Examples of cytoplasmic male sterility (CMS) were for instance described in Brassica species. However, genetic determinants for male sterility can also be located in the nuclear genome. Male sterile plants can also be obtained by plant biotechnology methods such as genetic engineering. A particularly useful means of obtaining male-sterile plants is described in WO 1989/10396 in which, for example, a ribonuclease such as barnase is selectively expressed in the tapetum cells in the stamens. Fertility can then be restored by expression in the tapetum cells of a ribonuclease inhibitor such as barstar.

Plants or plant cultivars (obtained by plant biotechnology methods such as genetic engineering) which may be treated according to the invention are herbicide-tolerant plants, i.e. plants made tolerant to one or more given herbicides. Such plants can be obtained either by genetic transformation, or by selection of plants containing a mutation imparting such herbicide tolerance.

Herbicide-tolerant plants are for example glyphosate-tolerant plants, i.e. plants made tolerant to the herbicide glyphosate or salts thereof. Plants can be made tolerant to glyphosate through different means. For example, glyphosate-tolerant plants can be obtained by transforming the plant with a gene encoding the enzyme 5-enolpyruvylshikimate-3-phosphate synthase (EPSPS). Examples of such EPSPS genes are the AroA gene (mutant CT7) of the bacterium *Salmonella typhimurium,* the CP4 gene of the bacterium *Agrobacterium sp*., the genes encoding a Petunia EPSPS, a Tomato EPSPS, or an Eleusine EPSPS (WO 2001/66704). It can also be a mutated EPSPS. Glyphosate-tolerant plants can also be obtained by expressing a gene that encodes a glyphosate oxido-reductase enzyme. Glyphosate-tolerant plants can also be obtained by expressing a gene that encodes a glyphosate acetyl transferase enzyme. Glyphosate-tolerant plants can also be obtained by selecting plants containing naturally-occurring mutations of the above-mentioned genes.

Other herbicide resistant plants are for example plants that are made tolerant to herbicides inhibiting the enzyme glutamine synthase, such as bialaphos, phosphinothricin or glufosinate. Such plants can be obtained by expressing an enzyme detoxifying the herbicide or a mutant glutamine synthase enzyme that is resistant to inhibition. One such efficient detoxifying enzyme is an enzyme encoding a phosphinothricin acetyltransferase (such as the bar or pat protein from Streptomyces species). Plants expressing an exogenous phosphinothricin acetyltransferase are described.

Further herbicide-tolerant plants are also plants that are made tolerant to the herbicides inhibiting the enzyme hydroxyphenylpyruvatedioxygenase (HPPD). Hydroxyphenylpyruvatedioxygenases are enzymes that catalyze the reaction in which para-hydroxyphenylpyruvate (HPP) is transformed into homogentisate. Plants tolerant to HPPD-inhibitors can be transformed with a gene encoding a naturally-occurring resistant HPPD enzyme, or a gene encoding a mutated HPPD enzyme. Tolerance to HPPD-inhibitors can also be obtained by transforming plants with genes encoding certain enzymes enabling the formation of homogentisate despite the inhibition of the native HPPD enzyme by the HPPD-inhibitor. Tolerance of plants to HPPD inhibitors can also be improved by transforming plants with a gene encoding an enzyme prephenate dehydrogenase in addition to a gene encoding an HPPD-tolerant enzyme.

Still further herbicide resistant plants are plants that are made tolerant to acetolactate synthase (ALS) inhibitors. Known ALS-inhibitors include, for example, sulfonylurea, imidazolinone, triazolopyrimidines, pyrimidinyloxy(thio)benzoates, and/or sulfonylaminocarbonyltriazolinone herbicides. Different mutations in the ALS enzyme (also known as acetohydroxyacid synthase, AHAS) are known to confer tolerance to different herbicides and groups of herbicides. The production of sulfonylurea-tolerant plants and imidazolinone-tolerant plants is described. Other imidazolinone-tolerant plants are also described. Further sulfonylurea- and imidazolinone-tolerant plants are also described.

Other plants tolerant to imidazolinone and/or sulfonylurea can be obtained by induced mutagenesis, selection in cell cultures in the presence of the herbicide or mutation breeding as described for soybeans, for rice, for sugar beet, for lettuce, or for sunflower.

Plants or plant cultivars (obtained by plant biotechnology methods such as genetic engineering) which may also be treated according to the invention are insect-resistant transgenic plants, i.e. plants made resistant to attack by certain target insects. Such plants can be obtained by genetic transformation, or by selection of plants containing a mutation imparting such insect resistance.

An "insect-resistant transgenic plant", as used herein, includes any plant containing at least one transgene comprising a coding sequence encoding:
1) an insecticidal crystal protein from *Bacillus thuringiensis* or an insecticidal portion thereof, such as the insecticidal crystal proteins listed at the *Bacillus thuringiensis* toxin nomenclature, online at: http://www.lifesci.sussex.ac.uk/Home/Neil_Crickmore/Bt/), or insecticidal portions thereof, e.g., proteins of the Cry protein classes Cry1Ab, Cry1Ac, Cry1F, Cry2Ab, Cry3Aa, or Cry3Bb or insecticidal portions thereof; or
2) a crystal protein from *Bacillus thuringiensis* or a portion thereof which is insecticidal in the presence of a second other crystal protein from *Bacillus thuringiensis* or a portion thereof, such as the binary toxin made up of the Cry34 and Cry35 crystal proteins; or
3) a hybrid insecticidal protein comprising parts of different insecticidal crystal proteins from *Bacillus thuringiensis*, such as a hybrid of the proteins of 1) above or a hybrid of the proteins of 2) above, e.g., the Cry1A.105 protein produced by corn event MON98034; or
4) a protein of any one of 1) to 3) above wherein some, particularly 1 to 10, amino acids have been replaced by another amino acid to obtain a higher insecticidal activity to a target insect species, and/or to expand the range of target insect species affected, and/or because of changes introduced into the encoding DNA during cloning or transformation, such as the Cry3Bb1 protein in corn events MON863 or MON88017, or the Cry3A protein in corn event MIR604;
5) an insecticidal secreted protein from *Bacillus thuringiensis* or *Bacillus cereus,* or an insecticidal portion thereof, such as the vegetative insecticidal (VIP) proteins listed at:
   http://www.lifesci.sussex.ac.uk/home/Neil Crickmore/Bt/vip.html, e.g., proteins from the VIP3Aa protein class; or
6) a secreted protein from *Bacillus thuringiensis* or *Bacillus cereus* which is insecticidal in the presence of a second secreted protein from *Bacillus thuringiensis* or *B. cereus,* such as the binary toxin made up of the VIP1A and VIP2A proteins; or
7) a hybrid insecticidal protein comprising parts from different secreted proteins from *Bacillus thuringiensis* or *Bacillus cereus,* such as a hybrid of the proteins in 1) above or a hybrid of the proteins in 2) above; or
8) a protein of any one of 1) to 3) above wherein some, particularly 1 to 10, amino acids have been replaced by another amino acid to obtain a higher insecticidal activity to a target insect species, and/or to expand the range of target insect species affected, and/or because of changes introduced into the encoding DNA during cloning or transformation (while still encoding an insecticidal protein), such as the VIP3Aa protein in cotton event COT102.

Of course, an insect-resistant transgenic plant, as used herein, also includes any plant comprising a combination of genes encoding the proteins of any one of the above classes 1 to 8. In one embodiment, an insect-resistant plant contains more than one transgene encoding a protein of any one of the above classes 1 to 8, to expand the range of target insect species affected when using different proteins directed at different target insect species, or to delay insect resistance development to the plants by using different proteins insecticidal to the same target insect species but having a different mode of action, such as binding to different receptor binding sites in the insect.

Plants or plant cultivars (obtained by plant biotechnology methods such as genetic engineering) which may also be treated according to the invention are tolerant to abiotic stresses. Such plants can be obtained by genetic transformation, or by selection of plants containing a mutation imparting such stress resistance. Particularly useful stress tolerance plants include:
a. plants which contain a transgene capable of reducing the expression and/or the activity of poly(ADP-ribose)polymerase (PARP) gene in the plant cells or plants.
b. plants which contain a stress tolerance enhancing transgene capable of reducing the expression and/or the activity of the PARG encoding genes of the plants or plants cells.
c. plants which contain a stress tolerance enhancing transgene coding for a plant-functional enzyme of the nicotinamide adenine dinucleotide salvage synthesis pathway including nicotinamidase, nicotinate phosphoribosyltransferase, nicotinic acid mononucleotide adenyl transferase, nicotinamide adenine dinucleotide synthetase or nicotine amide phosphoribosyltransferase.

Plants or plant cultivars (obtained by plant biotechnology methods such as genetic engineering) which may also be treated according to the invention show altered quantity, quality and/or storage-stability of the harvested product and/or altered properties of specific ingredients of the harvested product such as :
1) transgenic plants which synthesize a modified starch, which in its physical-chemical characteristics, in particular the amylose content or the amylose/amylopectin ratio, the degree of branching, the average chain length, the side chain distribution, the viscosity behaviour, the gelling strength, the starch grain size and/or the starch grain morphology, is changed in comparison with the synthesised starch in wild type plant cells or plants, so that this is better suited for special applications. Said transgenic plants synthesizing a modified starch are disclosed.
2) transgenic plants which synthesize non starch carbohydrate polymers or which synthesize non starch carbohydrate polymers with altered properties in comparison to wild type plants without genetic modification. Examples are plants producing polyfructose, especially of the inulin and levan-type, plants producing alpha 1,4 glucans, plants producing alpha-1,6 branched alpha-1,4-glucans, plants producing alternan,
3) transgenic plants which produce hyaluronan.

Plants or plant cultivars (that can be obtained by plant biotechnology methods such as genetic engineering) which may also be treated according to the invention are plants, such as cotton plants, with altered fiber characteristics. Such plants can be obtained by genetic transformation, or by selection of plants contain a mutation imparting such altered fiber characteristics and include:
a) Plants, such as cotton plants, containing an altered form of cellulose synthase genes,
b) Plants, such as cotton plants, containing an altered form of rsw2 or rsw3 homologous nucleic acids,
c) Plants, such as cotton plants, with increased expression of sucrose phosphate synthase,
d) Plants, such as cotton plants, with increased expression of sucrose synthase,
e) Plants, such as cotton plants, wherein the timing of the plasmodesmatal gating at the basis of the fiber cell is altered, e.g. through downregulation of fiberselective β 1,3-glucanase,
f) Plants, such as cotton plants, having fibers with altered reactivity, e.g. through the expression of N-acteylglucosaminetransferase gene including nodC and chitinsynthase genes.

Plants or plant cultivars (that can be obtained by plant biotechnology methods such as genetic engineering) which may also be treated according to the invention are plants, such as oilseed rape or related Brassica plants, with altered oil profile characteristics. Such plants can be obtained by genetic transformation or by selection of plants contain a mutation imparting such altered oil characteristics and include:
a) Plants, such as oilseed rape plants, producing oil having a high oleic acid content,
b) Plants such as oilseed rape plants, producing oil having a low linolenic acid content,
c) Plant such as oilseed rape plants, producing oil having a low level of saturated fatty acids.

Particularly useful transgenic plants which may be treated according to the invention are plants which comprise one or more genes which encode one or more toxins, such as the following which are sold under the trade names YIELD GARD® (for example maize, cotton, soya beans),

KnockOut® (for example maize), BiteGard® (for example maize), Bt-Xtra® (for example maize), StarLink® (for example maize), Bollgard® (cotton), Nucotn® (cotton), Nucotn 33B®(cotton), NatureGard® (for example maize), Protecta® and NewLeaf® (potato). Examples of herbicide-tolerant plants which may be mentioned are maize varieties, cotton varieties and soya bean varieties which are sold under the trade names Roundup Ready® (tolerance to glyphosate, for example maize, cotton, soya bean), Liberty Link® (tolerance to phosphinotricin, for example oilseed rape), IMI® (tolerance to imidazolinones) and STS® (tolerance to sulphonylureas, for example maize). Herbicide-resistant plants (plants bred in a conventional manner for herbicide tolerance) which may be mentioned include the varieties sold under the name Clearfield® (for example maize).

Particularly useful transgenic plants which may be treated according to the invention are plants containing transformation events, or combination of transformation events, that are listed for example in the databases from various national or regional regulatory agencies (see for example http://gmoinfo.jrc.it/gmp browse.aspx and http://www.agbios.com/dbase.php).

**Table A**

| **No.** | **Trans-genic event** | **Company** | **Description** | **Crop** |
|---|---|---|---|---|
| A-1 | ASR368 | Scotts Seeds | Glyphosate tolerance derived by inserting a modified 5-enolpyruvylshikimate-3-phosphate synthase (EPSPS) encoding gene from Agrobacterium tumefaciens. | *Agrostis stolonifera Creeping Bentgrass* |
| A-2 | H7-1 | Monsanto Company | Glyphosate herbicide tolerant sugar beet produced by inserting a gene encoding the enzyme 5-enolypyruvylshikimate-3-phosphate synthase (EPSPS) from the CP4 strain of Agrobacterium tumefaciens. | *Beta vulgaris* |
| A-3 | T120-7 | Bayer CropScience (Aventis CropScience( AgrEvo)) | Introduction of the PPT-acetyltransferase (PAT) encoding gene from Streptomyces viridochromogenes, an aerobic soil bacteria. PPT normally acts to inhibit glutamine synthetase, causing a fatal accumulation of ammonia. Acetylated PPT is inactive. | *Beta vulgaris* |
| A-4 | GTSB77 | Novartis Seeds; Monsanto Company | Glyphosate herbicide tolerant sugar beet produced by inserting a gene encoding the enzyme 5-enolypyruvylshikimate-3-phosphate synthase (EPSPS) from the CP4 strain of Agrobacterium tumefaciens. | *Beta vulgaris sugar Beet* |
| A-5 | 23-18-17, 23-198 | Monsanto Company (formerly Calgene) | High laurate (12:0) and myristate (14:0) canola produced by inserting a thioesterase encoding gene from the California bay laurel (Umbellularia californica). | *Brassica napus* (Argentine Canola) |
| A-6 | 45A37, 46A40 | Pioneer Hi-Bred International Inc. | High oleic acid and low linolenic acid canola produced through a combination of chemical mutagenesis to select for a fatty acid desaturase mutant with elevated oleic acid, and traditional back-crossing to introduce the low linolenic acid trait. | *Brassica napus* (Argentine Canola) |
| A-7 | 46A12, 46A16 | Pioneer Hi-Bred International Inc. | Combination of chemical mutagenesis, to achieve the high oleic acid trait, and traditional breeding with registered canola varieties. | *Brassica napus* (Argentine Canola) |
| A-8 | GT200 | Monsanto Company | Glyphosate herbicide tolerant canola produced by inserting genes encoding the enzymes 5-enolypyruvylshikimate-3 -phosphate synthase (EPSPS) from the CP4 strain of Agrobacterium tumefaciens and glyphosate oxidase from Ochrobactrum anthropi. | *Brassica napus* (Argentine Canola) |
| A-9 | GT73, RT73 | Monsanto Company | Glyphosate herbicide tolerant canola produced by inserting genes encoding the enzymes 5-enolypyruvylshikimate-3-phosphate synthase (EPSPS) from the CP4 strain of Agrobacterium tumefaciens and glyphosate oxidase from Ochrobactrum anthropi. | *Brassica napus* (Argentine Canola) |
| A-10 | HCN10 | Aventis CropScience | Introduction of the PPT-acetyltransferase (PAT) encoding gene from Streptomyces viridochromogenes, an aerobic soil bacteria. PPT normally acts to inhibit glutamine synthetase, causing a fatal accumulation of ammonia. Acetylated PPT is inactive. | *Brassica napus* (Argentine Canola) |
| A-11 | HCN92 | Bayer CropScience (Aventis CropScience( AgrEvo)) | Introduction of the PPT-acetyltransferase (PAT) encoding gene from Streptomyces viridochromogenes, an aerobic soil bacteria. PPT normally acts to inhibit glutamine synthetase, causing a fatal accumulation of ammonia. Acetylated PPT is inactive. | *Brassica napus* (Argentine Canola) |
| A-12 | MS1, RF1 =>PGS1 | Aventis CropScience (formerly Plant Genetic Systems) | Male-sterility, fertility restoration, pollination control system displaying glufosinate herbicide tolerance. MS lines contained the barnase gene from Bacillus amyloliquefaciens, RF lines contained the barstar gene from the same bacteria, and both lines contained the phosphinothricin N-acetyltransferase (PAT) encoding gene from Streptomyces hygroscopicus. | *Brassica napus* (Argentine Canola) |
| A-13 | MS1, RF2 =>PGS2 | Aventis CropScience (formerly Plant Genetic Systems) | Male-sterility, fertility restoration, pollination control system displaying glufosinate herbicide tolerance. MS lines contained the barnase gene from Bacillus amyloliquefaciens, RF lines contained the barstar gene from the same bacteria, and both lines contained the phosphinothricin N-acetyltransferase (PAT) encoding gene from Streptomyces hygroscopicus. | *Brassica napus* (Argentine Canola) |
| A-14 | MS8xRF3 | Bayer CropScience (Aventis CropScience( AgrEvo)) | Male-sterility, fertility restoration, pollination control system displaying glufosinate herbicide tolerance. MS lines contained the barnase gene from Bacillus amyloliquefaciens, RF lines contained the barstar gene from the same bacteria, and both lines contained the phosphinothricin N-acetyltransferase (PAT) encoding gene from Streptomyces hygroscopicus. | *Brassica napus* (Argentine Canola) |
| A-15 | NS738, NS1471, NS1473 | Pioneer Hi-Bred International Inc. | Selection of somaclonal variants with altered acetolactate synthase (ALS) enzymes, following chemical mutagenesis. Two lines (P1,P2) were initially selected with modifications at different unlinked loci. NS738 contains the P2 mutation only. | *Brassica napus* (Argentine Canola) |
| A-16 | OXY-235 | Aventis CropScience (formerly Rhône Poulenc Inc.) | Tolerance to the herbicides bromoxynil and ioxynil by incorporation of the nitrilase gene from Klebsiella pneumoniae. | *Brassica napus* (Argentine Canola) |
| A-17 | PHY14, PHY35 | Aventis CropScience (formerly Plant Genetic Systems) | Male sterility was via insertion of the barnase ribonuclease gene from Bacillus amyloliquefaciens; fertility restoration by insertion of the barstar RNase inhibitor; PPT resistance was via PPT-acetyltransferase (PAT) from Streptomyces hygroscopicus. | *Brassica napus* (Argentine Canola) |
| A-18 | PHY36 | Aventis CropScience (formerly Plant Genetic Systems) | Male sterility was via insertion of the barnase ribonuclease gene from Bacillus amyloliquefaciens; fertility restoration by insertion of the barstar RNase inhibitor; PPT resistance was via PPT-acetyltransferase (PAT) from Streptomyces hygroscopicus. | *Brassica napus* (Argentine Canola) |
| A-19 | T45 (HCN28) | Bayer CropScience (Aventis CropScience( AgrEvo)) | Introduction of the PPT-acetyltransferase (PAT) encoding gene from Streptomyces viridochromogenes, an aerobic soil bacteria. PPT normally acts to inhibit glutamine synthetase, causing a fatal accumulation of ammonia. Acetylated PPT is inactive. | *Brassica napus* (Argentine Canola) |
| A-20 | HCR-1 | Bayer CropScience (Aventis CropScience( AgrEvo)) | Introduction of the glufosinate ammonium herbicide tolerance trait from transgenic B. napus line T45. This trait is mediated by the phosphinothricin acetyltransferase (PAT) encoding gene from S. viridochromogenes. | *Brassica rapa* (Polish Canola) |
| A-21 | ZSR500/502 | Monsanto Company | Introduction of a modified 5-enol-pyruvylshikimate-3-phosphate synthase (EPSPS) and a gene from Achromobacter sp that degrades glyphosate by conversion to aminomethylphosphonic acid (AMPA) and glyoxylate by interspecific crossing with GT73. | *Brassica rapa* (Polish Canola) |
| A-22 | 55-1/63-1 | Cornell University | Papaya ringspot virus (PRSV) resistant papaya produced by inserting the coat protein (CP) encoding sequences from this plant potyvirus. | *Carica papaya* (Papaya) |
| A-23 | RM3-3, RM3-4, RM3-6 | Bejo Zaden BV | Male sterility was via insertion of the barnase ribonuclease gene from Bacillus amyloliquefaciens; PPT resistance was via the bar gene from S. hygroscopicus, which encodes the PAT enzyme. | *Cichorium intybus* (Chicory ) |
| A-24 | A, B | Agritope Inc. | Reduced accumulation of S-adenosylmethionine (SAM), and consequently reduced ethylene synthesis, by introduction of the gene encoding S-adenosylmethionine hydrolase. | *Cucumis melo* (Melon) |
| A-25 | CZW-3 | Asgrow (USA); Seminis Vegetable Inc. (Canada) | Cucumber mosiac virus (CMV), zucchini yellows mosaic (ZYMV) and watermelon mosaic virus (WMV) 2 resistant squash ( Curcurbita pepo) produced by inserting the coat protein (CP) encoding sequences from each of these plant viruses into the host genome. | *Cucurbita pepo* (Squash) |
| A-26 | ZW20 | Upjohn (USA); Seminis Vegetable Inc. (Canada) | Zucchini yellows mosaic (ZYMV) and watermelon mosaic virus (WMV) 2 resistant squash ( Curcurbita pepo) produced by inserting the coat protein (CP) encoding sequences from each of these plant potyviruses into the host genome. | *Cucurbita pepo* (Squash) |
| A-27 | 66 | Florigene Pty Ltd. | Delayed senescence and sulfonylurea herbicide tolerant carnations produced by inserting a truncated copy of the carnation aminocyclopropane cyclase (ACC) synthase encoding gene in order to suppress expression of the endogenous unmodified gene, which is required for normal ethylene biosynthesis. Tolerance to sulfonyl urea herbicides was via the introduction of a chlorsulfuron tolerant version of the acetolactate synthase (ALS) encoding gene from tobacco. | *Dianthus caryophyllus* (Ca rnation) |
| A-28 | 4,11,15,16 | Florigene Pty Ltd. | Modified colour and sulfonylurea herbicide tolerant carnations produced by inserting two anthocyanin biosynthetic genes whose expression results in a violet/mauve colouration.Tolerance to sulfonyl urea herbicides was via the introduction of a chlorsulfuron tolerant version of the acetolactate synthase (ALS) encoding gene from tobacco. | *Dianthus caryophyllus* (Ca rnation) |
| A-29 | 959A, 988A, 1226A, 1351A, 1363A, 1400A | Florigene Pty Ltd. | Introduction of two anthocyanin biosynthetic genes to result in a violet/mauve colouration; Introduction of a variant form of acetolactate synthase (ALS). | *Dianthus caryophyllus* (Ca rnation) |
| A-30 | A2704-12, A2704-21, A5547-35 | Aventis CropScience | Glufosinate ammonium herbicide tolerant soybean produced by inserting a modified phosphinothricin acetyltransferase (PAT) encoding gene from the soil bacterium Streptomyces viridochromogenes. | *Glycine max* L. (Soybean) |
| A-31 | A5547-127 | Bayer CropScience (Aventis CropScience( AgrEvo)) | Glufosinate ammonium herbicide tolerant soybean produced by inserting a modified phosphinothricin acetyltransferase (PAT) encoding gene from the soil bacterium Streptomyces viridochromogenes. | *Glycine max* L. (Soybean) |
| A-32 | DP356043 | Pioneer Hi-Bred International Inc. | Soybean event with two herbicide tolerance genes: glyphosate N-acetlytransferase, which detoxifies glyphosate, and a modified acetolactate synthase (A | *Glycine max* L. (Soybean) |
| A-33 | G94-1, G94-19, G168 | DuPont Canada Agricultural Products | High oleic acid soybean produced by inserting a second copy of the fatty acid desaturase (GmFad2-1) encoding gene from soybean, which resulted in "silencing" of the endogenous host gene. | *Glycine max* L. (Soybean) |
| A-34 | GTS 40-3-2 | Monsanto Company | Glyphosate tolerant soybean variety produced by inserting a modified 5-enolpyruvylshikimate-3-phosphate synthase (EPSPS) encoding gene from the soil bacterium Agrobacterium tumefaciens. | *Glycine max* L. (Soybean) |
| A-35 | GU262 | Bayer CropScience (Aventis CropScience( AgrEvo)) | Glufosinate ammonium herbicide tolerant soybean produced by inserting a modified phosphinothricin acetyltransferase (PAT) encoding gene from the soil bacterium Streptomyces viridochromogenes. | *Glycine max* L. (Soybean) |
| A-36 | MON89788 | Monsanto Company | Glyphosate-tolerant soybean produced by inserting a modified 5-enolpyruvylshikimate-3-phosphate synthase (EPSPS) encoding aroA (epsps) gene from Agrobacterium tumefaciens CP4. | *Glycine max* L. (Soybean) |
| A-37 | OT96-15 | Agriculture & Agri-Food Canada | Low linolenic acid soybean produced through traditional cross-breeding to incorporate the novel trait from a naturally occurring fan1 gene mutant that was selected for low linolenic acid. | *Glycine max* L. (Soybean) |
| A-38 | W62, W98 | Bayer CropScience (Aventis CropScience( AgrEvo)) | Glufosinate ammonium herbicide tolerant soybean produced by inserting a modified phosphinothricin acetyltransferase (PAT) encoding gene from the soil bacterium Streptomyces hygroscopicus. | *Glycine max* L. (Soybean) |
| A-39 | 15985 | Monsanto Company | Insect resistant cotton derived by transformation of the DP50B parent variety, which contained event 531 (expressing Cry1Ac protein), with purified plasmid DNA containing the cry2Ab gene from B. thuringiensis subsp. kurstaki. | *Gossypium hirsutum* L. (Cotton) |
| A-40 | 19-51A | DuPont Canada Agricultural Products | Introduction of a variant form of acetolactate synthase (ALS). | *Gossypium hirsutum* L. (Cotton) |
| A-41 | 281-24-236 | DOW AgroSciences LLC | Insect-resistant cotton produced by inserting the cry1F gene from Bacillus thuringiensisvar. aizawai. The PAT encoding gene from Streptomyces viridochromogenes was introduced as a selectable marker. | *Gossypium hirsutum* L. (Cotton) |
| A-42 | 3006-210-23 | DOW AgroSciences LLC | Insect-resistant cotton produced by inserting the cry1Ac gene from Bacillus thuringiensissubsp. kurstaki. The PAT encoding gene from Streptomyces viridochromogenes was introduced as a selectable marker. | *Gossypium hirsutum* L. (Cotton) |
| A-43 | 31807/31808 | Calgene Inc. | Insect-resistant and bromoxynil herbicide tolerant cotton produced by inserting the cry1Ac gene from Bacillus thuringiensis and a nitrilase encoding gene from Klebsiella pneumoniae. | *Gossypium hirsutum* L. (Cotton) |
| A-44 | BXN | Calgene Inc. | Bromoxynil herbicide tolerant cotton produced by inserting a nitrilase encoding gene from Klebsiella pneumoniae. | *Gossypium hirsutum* L. (Cotton) |
| A-45 | COT102 | Syngenta Seeds, Inc. | Insect-resistant cotton produced by inserting the vip3A(a) gene from Bacillus thuringiensisAB88. The APH4 encoding gene from E. coli was introduced as a selectable marker. | *Gossypium hirsutum* L. (Cotton) |
| A-46 | DAS-21∅23-5 x DAS-24236-5 | DOW AgroSciences LLC | WideStrike™, a stacked insect-resistant cotton derived from conventional cross-breeding of parental lines 3006-210-23 (OECD identifier: DAS-21∅23-5) and 281-24-236 (OECD identifier: DAS-24236-5). | *Gossypium hirsutum* L. (Cotton) |
| A-47 | DAS-21∅23-5 x DAS-24236-5 x MON88913 | DOW AgroSciences LLC and Pioneer Hi-Bred International Inc. | Stacked insect-resistant and glyphosate-tolerant cotton derived from conventional cross-breeding of WideStrike cotton (OECD identifier: DAS-21∅23-5 x DAS-24236-5) with MON88913, known as RoundupReady Flex (OECD identifier: MON-88913-8). | *Gossypium hirsutum* L. (Cotton) |
| A-48 | DAS-21∅23-5 x DAS-24236-5 x MON-01445-2 | DOW AgroSciences LLC | WideStrike™/Roundup Ready® cotton, a stacked insect-resistant and glyphosate-tolerant cotton derived from conventional cross-breeding of WideStrike cotton (OECD identifier: DAS-21∅23-5 x DAS-24236-5) with MON1445 (OECD identifier: MON-∅1445-2). | *Gossypium hirsutum* L. (Cotton) |
| A-49 | LLCotton25 | Bayer CropScience (Aventis CropScience( AgrEvo)) | Glufosinate ammonium herbicide tolerant cotton produced by inserting a modified phosphinothricin acetyltransferase (PAT) encoding gene from the soil bacterium Streptomyces hygroscopicus. | *Gossypium hirsutum* L. (Cotton) |
| A-50 | LLCotton25 x MON15985 | Bayer CropScience (Aventis CropScience( AgrEvo)) | Stacked herbicide tolerant and insect resistant cotton combining tolerance to glufosinate ammonium herbicide from LLCotton25 (OECD identifier: ACS-GH∅∅1-3) with resistance to insects from MON15985 (OECD identifier: MON-15985-7) | *Gossypium hirsutum* L. (Cotton) |
| A-51 | MON1445/16 98 | Monsanto Company | Glyphosate herbicide tolerant cotton produced by inserting a naturally glyphosate tolerant form of the enzyme 5-enolpyruvyl shikimate-3-phosphate synthase (EPSPS) from A. tumefaciens strain CP4. | *Gossypium hirsutum* L. (Cotton) |
| A-52 | MON15985 x MON88913 | Monsanto Company | Stacked insect resistant and glyphosate tolerant cotton produced by conventional cross-breeding of the parental lines MON88913 (OECD identifier: MON-88913-8) and 15985 (OECD identifier: MON-15985-7). Glyphosate tolerance is derived from MON88913 which contains two genes encoding the enzyme 5-enolypyruvylshikimate-3 -phosphate synthase (EPSPS) from the CP4 strain of Agrobacterium tumefaciens. Insect resistance is derived MON15985 which was produced by transformation of the DP50B parent variety, which contained event 531 (expressing Cry1Ac protein), with purified plasmid DNA containing the cry2Ab gene from B. thuringiensis subsp. kurstaki. | *Gossypium hirsutum* L. (Cotton) |
| A-53 | MON-15985-7 x MON-∅1445-2 | Monsanto Company | Stacked insect resistant and herbicide tolerant cotton derived from conventional cross-breeding of the parental lines 15985 (OECD identifier: MON-15985-7) and MON1445 (OECD identifier: MON-∅1445-2). | *Gossypium hirsutum* L. (Cotton) |
| A-54 | MON531/757 /1076 | Monsanto Company | Insect-resistant cotton produced by inserting the cry1Ac gene from Bacillus thuringiensis subsp. kurstaki HD-73 (B.t.k.). | *Gossypium hirsutum* L. (Cotton) |
| A-55 | MON88913 | Monsanto Company | Glyphosate herbicide tolerant cotton produced by inserting two genes encoding the enzyme 5-enolypyruvylshikimate-3-phosphate synthase (EPSPS) from the CP4 strain of Agrobacterium tumefaciens. | *Gossypium hirsutum* L. (Cotton) |
| A-56 | MON-∅∅531-6 x MON-∅1445-2 | Monsanto Company | Stacked insect resistant and herbicide tolerant cotton derived from conventional cross-breeding of the parental lines MON531 (OECD identifier: MON-∅∅531-6) and MON1445 (OECD identifier: MON-∅1445-2). | *Gossypium hirsutum* L. (Cotton) |
| A-57 | X81359 | BASF Inc. | Tolerance to imidazolinone herbicides by selection of a naturally occurring mutant. | *Helianthus annuus* (Sunflow er) |
| A-58 | RH44 | BASF Inc. | Selection for a mutagenized version of the enzyme acetohydroxyacid synthase (AHAS), also known as acetolactate synthase (ALS) or acetolactate pyruvate- lyase. | *Lens culinaris* (Lentil) |
| A-59 | FP967 | University of Saskatchewan , Crop Dev. Centre | A variant form of acetolactate synthase (ALS) was obtained from a chlorsulfuron tolerant line of A. thaliana and used to transform flax. | *Linum usitatissiumum* L. (Flax, Linseed) |
| A-60 | 5345 | Monsanto Company | Resistance to lepidopteran pests through the introduction of the cry1Ac gene from Bacillus thuringiensis subsp. Kurstaki. | *Lycopersicon esculentum* (Tom ato) |
| A-61 | 8338 | Monsanto Company | Introduction of a gene sequence encoding the enzyme 1-amino-cyclopropane-1-carboxylic acid deaminase (ACCd) that metabolizes the precursor of the fruit ripening hormone ethylene. | *Lycopersicon esculentum* (Tom ato) |
| A-62 | 1345-4 | DNA Plant Technology Corporation | Delayed ripening tomatoes produced by inserting an additional copy of a truncated gene encoding 1-aminocyclopropane-1-carboxyllic acid (ACC) synthase, which resulted in downregulation of the endogenous ACC synthase and reduced ethylene accumulation. | *Lycopersicon esculentum* (Tom ato) |
| A-63 | 35 1 N | Agritope Inc. | Introduction of a gene sequence encoding the enzyme S-adenosylmethionine hydrolase that metabolizes the precursor of the fruit ripening hormone ethylene | *Lycopersicon esculentum* (Tom ato) |
| A-64 | B, Da, F | Zeneca Seeds | Delayed softening tomatoes produced by inserting a truncated version of the polygalacturonase (PG) encoding gene in the sense or anti-sense orientation in order to reduce expression of the endogenous PG gene, and thus reduce pectin degradation. | *Lycopersicon esculentum* (Tom ato) |
| A-65 | FLAVR SAVR | Calgene Inc. | Delayed softening tomatoes produced by inserting an additional copy of the polygalacturonase (PG) encoding gene in the anti-sense orientation in order to reduce expression of the endogenous PG gene and thus reduce pectin degradation. | *Lycopersicon esculentum* (Tom ato) |
| A-66 | J101, J163 | Monsanto Company and Forage Genetics International | Glyphosate herbicide tolerant alfalfa (lucerne) produced by inserting a gene encoding the enzyme 5-enolypyruvylshikimate-3-phosphate synthase (EPSPS) from the CP4 strain of Agrobacterium tumefaciens. | *Medicago sativa* (Alfalfa) |
| A-67 | C/F/93/08-02 | Societe National d'Exploitation des Tabacs et Allumettes | Tolerance to the herbicides bromoxynil and ioxynil by incorporation of the nitrilase gene from Klebsiella pneumoniae. | *Nicotiana tabacum* L. (Tobacco) |
| A-68 | Vector 21-41 | Vector Tobacco Inc. | Reduced nicotine content through introduction of a second copy of the tobacco quinolinic acid phosphoribosyltransferase (QTPase) in the antisense orientation. The NPTII encoding gene from E. coli was introduced as a selectable marker to identify transformants. | *Nicotiana tabacum* L. (Tobacco) |
| A-69 | CL121, CL141, CFX51 | BASF Inc. | Tolerance to the imidazolinone herbicide, imazethapyr, induced by chemical mutagenesis of the acetolactate synthase (ALS) enzyme using ethyl methanesulfonate (EMS). | *Oryza sativa* (Rice) |
| A-70 | IMINTA-1, IMINTA-4 | BASF Inc. | Tolerance to imidazolinone herbicides induced by chemical mutagenesis of the acetolactate synthase (ALS) enzyme using sodium azide. | *Oryza sativa* (Rice) |
| A-71 | LLRICE06, LLRICE62 | Aventis CropScience | Glufosinate ammonium herbicide tolerant rice produced by inserting a modified phosphinothricin acetyltransferase (PAT) encoding gene from the soil bacterium Streptomyces hygroscopicus). | *Oryza sativa* (Rice) |
| A-72 | LLRICE601 | Bayer CropScience (Aventis CropScience( AgrEvo)) | Glufosinate ammonium herbicide tolerant rice produced by inserting a modified phosphinothricin acetyltransferase (PAT) encoding gene from the soil bacterium Streptomyces hygroscopicus). | *Oryza sativa* (Rice) |
| A-73 | C5 | United States Department of Agriculture - Agricultural Research Service | Plum pox virus (PPV) resistant plum tree produced through *Agrobacterium*-mediated transformation with a coat protein (CP) gene from the virus. | *Prunus domestica (Plum)* |
| A-74 | PWC16 | BASF Inc. | Tolerance to the imidazolinone herbicide, imazethapyr, induced by chemical mutagenesis of the acetolactate synthase (ALS) enzyme using ethyl methanesulfonate (EMS). | *Oryza sativa* (Rice) |
| A-75 | ATBT04-6, ATBT04-27, ATBT04-30, ATBT04-31, ATBT04-36, SPBT02-5, SPBT02-7 | Monsanto Company | Colorado potato beetle resistant potatoes produced by inserting the cry3A gene from Bacillus thuringiensis (subsp. Tenebrionis). | *Solanum tuberosum* L. (Potato) |
| A-76 | BT6, BT10, BT12, BT16, BT17, BT18, BT23 | Monsanto Company | Colorado potato beetle resistant potatoes produced by inserting the cry3A gene from Bacillus thuringiensis (subsp. Tenebrionis). | *Solanum tuberosum* L. (Potato) |
| A-77 | RBMT15-101, SEMT15-02, SEMT15-15 | Monsanto Company | Colorado potato beetle and potato virus Y (PVY) resistant potatoes produced by inserting the cry3A gene from Bacillus thuringiensis (subsp. Tenebrionis) and the coat protein encoding gene from PVY. | *Solanum tuberosum* L. (Potato) |
| A-78 | RBMT21-129, RBMT21-350, RBMT22-082 | Monsanto Company | Colorado potato beetle and potato leafroll virus (PLRV) resistant potatoes produced by inserting the cry3A gene from Bacillus thuringiensis (subsp. Tenebrionis) and the replicase encoding gene from PLRV. | *Solanum tuberosum* L. (Potato) |
| A-79 | AP205CL | BASF Inc. | Selection for a mutagenized version of the enzyme acetohydroxyacid synthase (AHAS), also known as acetolactate synthase (ALS) or acetolactate pyruvate- lyase. | *Triticum aestivum* (Wheat ) |
| A-80 | AP602CL | BASF Inc. | Selection for a mutagenized version of the enzyme acetohydroxyacid synthase (AHAS), also known as acetolactate synthase (ALS) or acetolactate pyruvate- lyase. | *Triticum aestivum* (Wheat ) |
| A-81 | BW255-2, BW238-3 | BASF Inc. | Selection for a mutagenized version of the enzyme acetohydroxyacid synthase (AHAS), also known as acetolactate synthase (ALS) or acetolactate pyruvate- lyase. | *Triticum aestivum* (Wheat ) |
| A-82 | BW7 | BASF Inc. | Tolerance to imidazolinone herbicides induced by chemical mutagenesis of the acetohydroxyacid synthase (AHAS) gene using sodium azide. | *Triticum aestivum* (Wheat ) |
| A-83 | MON71800 | Monsanto Company | Glyphosate tolerant wheat variety produced by inserting a modified 5-enolpyruvylshikimate-3-phosphate synthase (EPSPS) encoding gene from the soil bacterium Agrobacterium tumefaciens, strain CP4. | *Triticum aestivum* (Wheat ) |
| A-84 | SWP965001 | Cyanamid Crop Protection | Selection for a mutagenized version of the enzyme acetohydroxyacid synthase (AHAS), also known as acetolactate synthase (ALS) or acetolactate pyruvate- lyase. | *Triticum aestivum* (Wheat ) |
| A-85 | Teal 11A | BASF Inc. | Selection for a mutagenized version of the enzyme acetohydroxyacid synthase (AHAS), also known as acetolactate synthase (ALS) or acetolactate pyruvate- lyase. | *Triticum aestivum* (Wheat ) |
| A-86 | 176 | Syngenta Seeds, Inc. | Insect-resistant maize produced by inserting the cry1Ab gene from Bacillus thuringiensis subsp. kurstaki. The genetic modification affords resistance to attack by the European corn borer (ECB). | *Zea mays* L. (Maize) |
| A-87 | 3751IR | Pioneer Hi-Bred International Inc. | Selection of somaclonal variants by culture of embryos on imidazolinone containing media. | *Zea mays* L. (Maize) |
| A-88 | 676,678,680 | Pioneer Hi-Bred International Inc. | Male-sterile and glufosinate ammonium herbicide tolerant maize produced by inserting genes encoding DNA adenine methylase and phosphinothricin acetyltransferase (PAT) from Escherichia coli and Streptomyces viridochromogenes, respectively. | *Zea mays* L. (Maize) |
| A-89 | ACS-ZM∅∅3-2 x MON-∅∅81∅-6 | Bayer CropScience (Aventis CropScience( AgrEvo)) | Stacked insect resistant and herbicide tolerant corn hybrid derived from conventional cross-breeding of the parental lines T25 (OECD identifier: ACS-ZM∅∅3-2) and MON810 (OECD identifier:MON-∅∅81∅-6). | *Zea mays* L. (Maize) |
| A-90 | B16 (DLL25) | Dekalb Genetics Corporation | Glufosinate ammonium herbicide tolerant maize produced by inserting the gene encoding phosphinothricin acetyltransferase (PAT) from Streptomyces hygroscopicus. | *Zea mays* L. (Maize) |
| A-91 | BT11 (X4334CBR, X4734CBR) | Syngenta Seeds, Inc. | Insect-resistant and herbicide tolerant maize produced by inserting the cry1Ab gene from Bacillus thuringiensis subsp. kurstaki, and the phosphinothricin N-acetyltransferase (PAT) encoding gene from S. viridochromogenes. | *Zea mays* L. (Maize) |
| A-92 | BT11x MIR604 | Syngenta Seeds, Inc. | Stacked insect resistant and herbicide tolerant maize produced by conventional cross breeding of parental lines BT11 (OECD unique identifier: SYN-BT∅11-1) and MIR604 (OECD unique identifier: SYN-IR6∅5-5). Resistance to the European Corn Borer and tolerance to the herbicide glufosinate ammonium (Liberty) is derived from BT11, which contains the cry1Ab gene from Bacillus thuringiensis subsp. kurstaki, and the phosphinothricin N-acetyltransferase (PAT) encoding gene from S. viridochromogenes. Corn rootworm-resistance is derived from MIR604 which contains the mcry3A gene from Bacillus thuringiensis. | *Zea mays* L. (Maize) |
| A-93 | BT11x MIR604 x GA21 | Syngenta Seeds, Inc. | Stacked insect resistant and herbicide tolerant maize produced by conventional cross breeding of parental lines BT11 (OECD unique identifier: SYN-BT∅11-1), MIR604 (OECD unique identifier: SYN-IR6∅5-5) and GA21 (OECD unique identifier: MON-∅∅∅21-9). Resistance to the European Corn Borer and tolerance to the herbicide glufosinate ammonium (Liberty) is derived from BT11, which contains the cry1Ab gene from Bacillus thuringiensis subsp. kurstaki, and the phosphinothricin N-acetyltransferase (PAT) encoding gene from S. viridochromogenes. Corn rootworm-resistance is derived from MIR604 which contains the mcry3A gene from Bacillus thuringiensis. Tolerance to glyphosate herbcicide is derived from GA21 which contains a modified EPSPS gene from maize. | *Zea mays* L. (Maize) |
| A-94 | CBH-351 | Aventis CropScience | Insect-resistant and glufosinate ammonium herbicide tolerant maize developed by inserting genes encoding Cry9C protein from Bacillus thuringiensis subsp tolworthi and phosphinothricin acetyltransferase (PAT) from Streptomyces hygroscopicus. | *Zea mays* L. (Maize) |
| A-95 | DAS-06275-8 | DOW AgroSciences LLC | Lepidopteran insect resistant and glufosinate ammonium herbicide-tolerant maize variety produced by inserting the cry1F gene from Bacillus thuringiensis var aizawai and the phosphinothricin acetyltransferase (PAT) from Streptomyces hygroscopicus. | *Zea mays* L. (Maize) |
| A-96 | DAS-59122-7 | DOW AgroSciences LLC and Pioneer Hi-Bred International Inc. | Corn rootworm-resistant maize produced by inserting the cry34Ab1 and cry35Ab1 genes from Bacillus thuringiensis strain PS149B1. The PAT encoding gene from Streptomyces viridochromogenes was introduced as a selectable marker. | *Zea mays* L. (Maize) |
| A-97 | DAS-59122-7 x NK603 | DOW AgroSciences LLC and Pioneer Hi-Bred International Inc. | Stacked insect resistant and herbicide tolerant maize produced by conventional cross breeding of parental lines DAS-59122-7 (OECD unique identifier: DAS-59122-7) with NK603 (OECD unique identifier: MON-∅∅6∅3-6). Corn rootworm-resistance is derived from DAS-59122-7 which contains the cry34Ab1 and cry35Ab1 genes from Bacillus thuringiensis strain PS149B1. Tolerance to glyphosate herbcicide is derived from NK603. | *Zea mays* L. (Maize) |
| A-98 | DAS-59122-7 x TC1507 x NK603 | DOW AgroSciences LLC and Pioneer Hi-Bred International Inc. | Stacked insect resistant and herbicide tolerant maize produced by conventional cross breeding of parental lines DAS-59122-7 (OECD unique identifier: DAS-59122-7) and TC1507 (OECD unique identifier: DAS-∅15∅7-1) with NK603 (OECD unique identifier: MON-∅∅6∅3-6). Corn rootworm-resistance is derived from DAS-59122-7 which contains the cry34Ab1 and cry35Ab1 genes from Bacillus thuringiensis strain PS149B1. Lepidopteran resistance and toleraance to glufosinate ammonium herbicide is derived from TC1507. Tolerance to glyphosate herbcicide is derived from NK603. | *Zea mays* L. (Maize) |
| A-99 | DAS-∅15∅7-1 x MON-00603-6 | DOW AgroSciences LLC | Stacked insect resistant and herbicide tolerant corn hybrid derived from conventional cross-breeding of the parental lines 1507 (OECD identifier: DAS-∅15∅7-1) and NK603 (OECD identifier: MON-∅∅6∅3-6). | *Zea mays* L. (Maize) |
| A-100 | DBT418 | Dekalb Genetics Corporation | Insect-resistant and glufosinate ammonium herbicide tolerant maize developed by inserting genes encoding Cry1AC protein from Bacillus thuringiensis subsp kurstaki and phosphinothricin acetyltransferase (PAT) from Streptomyces hygroscopicus | *Zea mays* L. (Maize) |
| A-101 | DK404SR | BASF Inc. | Somaclonal variants with a modified acetyl-CoA-carboxylase (ACCase) were selected by culture of embryos on sethoxydim enriched medium. | *Zea mays* L. (Maize) |
| A-102 | Event 3272 | Syngenta Seeds, Inc. | Maize line expressing a heat stable alpha-amylase gene amy797E for use in the dry-grind ethanol process. The phosphomannose isomerase gene from E.coli was used as a selectable marker. | *Zea mays* L. (Maize) |
| A-103 | EXP1910IT | Syngenta Seeds, Inc. (formerly Zeneca Seeds) | Tolerance to the imidazolinone herbicide, imazethapyr, induced by chemical mutagenesis of the acetolactate synthase (ALS) enzyme using ethyl methanesulfonate (EMS). | *Zea mays* L. (Maize) |
| A-104 | GA21 | Monsanto Company | Introduction, by particle bombardment, of a modified 5-enolpyruvyl shikimate-3-phosphate synthase (EPSPS), an enzyme involved in the shikimate biochemical pathway for the production of the aromatic amino acids. | *Zea mays* L. (Maize) |
| A-105 | IT | Pioneer Hi-Bred International Inc. | Tolerance to the imidazolinone herbicide, imazethapyr, was obtained by in vitro selection of somaclonal variants. | *Zea mays* L. (Maize) |
| A-106 | LY038 | Monsanto Company | Altered amino acid composition, specifically elevated levels of lysine, through the introduction of the cordapA gene, derived from Corynebacterium glutamicum, encoding the enzyme dihydrodipicolinate synthase (cDHDPS). | *Zea mays* L. (Maize) |
| A-107 | MIR604 | Syngenta Seeds, Inc. | Corn rootworm resistant maize produced by transformation with a modified cry3A gene. The phosphomannose isomerase gene from E.coli was used as a selectable marker. | *Zea mays* L. (Maize) |
| A-108 | MIR604 x GA21 | Syngenta Seeds, Inc. | Stacked insect resistant and herbicide tolerant maize produced by conventional cross breeding of parental lines MIR604 (OECD unique identifier: SYN-IR6∅5-5) and GA21 (OECD unique identifier: MON-∅∅∅21-9). Corn rootworm-resistance is derived from MIR604 which contains the mcry3A gene from Bacillus thuringiensis. Tolerance to glyphosate herbcicide is derived from GA21. | *Zea mays* L. (Maize) |
| A-109 | MON80100 | Monsanto Company | Insect-resistant maize produced by inserting the cry1Ab gene from Bacillus thuringiensis subsp. kurstaki. The genetic modification affords resistance to attack by the European corn borer (ECB). | *Zea mays* L. (Maize) |
| A-110 | MON802 | Monsanto Company | Insect-resistant and glyphosate herbicide tolerant maize produced by inserting the genes encoding the Cry1Ab protein from Bacillus thuringiensis and the 5-enolpyruvylshikimate-3-phosphate synthase (EPSPS) from A. tumefaciens strain CP4. | *Zea mays* L. (Maize) |
| A-111 | MON809 | Pioneer Hi-Bred International Inc. | Resistance to European corn borer (Ostrinia nubilalis) by introduction of a synthetic cry1Ab gene. Glyphosate resistance via introduction of the bacterial version of a plant enzyme, 5-enolpyruvyl shikimate-3-phosphate synthase (EPSPS). | *Zea mays* L. (Maize) |
| A-112 | MON810 | Monsanto Company | Insect-resistant maize produced by inserting a truncated form of the cry1Ab gene from Bacillus thuringiensis subsp. kurstaki HD-1. The genetic modification affords resistance to attack by the European corn borer (ECB). | *Zea mays* L. (Maize) |
| A-113 | MON810 x MON88017 | Monsanto Company | Stacked insect resistant and glyphosate tolerant maize derived from conventional cross-breeding of the parental lines MON810 (OECD identifier: MON-∅∅81∅-6) and MON88017 (OECD identifier:MON-88∅17-3). European corn borer (ECB) resistance is derived from a truncated form of the cry1Ab gene from Bacillus thuringiensis subsp. kurstaki HD-1 present in MON810. Corn rootworm resistance is derived from the cry3Bb1 gene from Bacillus thuringiensis subspecies kumamotoensis strain EG4691 present in MON88017. Glyphosate tolerance is derived from a 5-enolpyruvylshikimate-3-phosphate synthase (EPSPS) encoding gene from Agrobacterium tumefaciens strain CP4 present in MON88017. | *Zea mays* L. (Maize) |
| A-114 | MON832 | Monsanto Company | Introduction, by particle bombardment, of glyphosate oxidase (GOX) and a modified 5-enolpyruvyl shikimate-3-phosphate synthase (EPSPS), an enzyme involved in the shikimate biochemical pathway for the production of the aromatic amino acids. | *Zea mays* L. (Maize) |
| A-115 | MON863 | Monsanto Company | Corn root worm resistant maize produced by inserting the cry3Bb1 gene from Bacillus thuringiensis subsp. kumamotoensis. | *Zea mays* L. (Maize) |
| A-116 | MON88017 | Monsanto Company | Corn rootworm-resistant maize produced by inserting the cry3Bb1 gene from Bacillus thuringiensis subspecies kumamotoensis strain EG4691. Glyphosate tolerance derived by inserting a 5-enolpyruvylshikimate-3-phosphate synthase (EPSPS) encoding gene from Agrobacterium tumefaciens strain CP4. | *Zea mays* L. (Maize) |
| A-117 | MON89034 | Monsanto Company | Maize event expressing two different insecticidal proteins from Bacillus thuringiensis providing resistance to number of lepidopteran pests. | *Zea mays* L. (Maize) |
| A-118 | MON89034 x MON88017 | Monsanto Company | Stacked insect resistant and glyphosate tolerant maize derived from conventional cross-breeding of the parental lines MON89034 (OECD identifier: MON-89∅34-3) and MON88017 (OECD identifier:MON-88∅17-3). Resistance to Lepiopteran insects is derived from two crygenes present in MON89043. Corn rootworm resistance is derived from a single cry genes and glyphosate tolerance is derived from the 5-enolpyruvylshikimate-3-phosphate synthase (EPSPS) encoding gene from Agrobacterium tumefaciens present in MON88017. | *Zea mays* L. (Maize) |
| A-119 | MON-00603-6 x MON-∅∅81∅-6 | Monsanto Company | Stacked insect resistant and herbicide tolerant corn hybrid derived from conventional cross-breeding of the parental lines NK603 (OECD identifier: MON-∅∅6∅3-6) and MON810 (OECD identifier: MON-∅∅81∅-6). | *Zea mays* L. (Maize) |
| A-120 | MON-∅∅81∅-6 x LY038 | Monsanto Company | Stacked insect resistant and enhanced lysine content maize derived from conventional cross-breeding of the parental lines MON810 (OECD identifier: MON-∅∅81∅-6) and LY038 (OECD identifier: REN-∅∅∅38-3). | *Zea mays* L. (Maize) |
| A-121 | MON-00863-5 x MON-00603-6 | Monsanto Company | Stacked insect resistant and herbicide tolerant corn hybrid derived from conventional cross-breeding of the parental lines MON863 (OECD identifier:MON-∅∅863-5) and NK603 (OECD identifier: MON-∅∅6∅3-6). | *Zea mays* L. (Maize) |
| A-122 | MON-00863-5 x MON-∅∅81∅-6 | Monsanto Company | Stacked insect resistant corn hybrid derived from conventional cross-breeding of the parental lines MON863 (OECD identifier: MON-∅∅863-5) and MON810 (OECD identifier: MON-∅∅81∅-6) | *Zea mays* L. (Maize) |
| A-123 | MON-00863-5 x MON-00810-6 x MON-00603-6 | Monsanto Company | Stacked insect resistant and herbicide tolerant corn hybrid derived from conventional cross-breeding of the stacked hybrid MON-∅∅863-5 x MON-∅∅81∅-6 and NK603 (OECD identifier:MON-∅∅6∅3-6). | *Zea mays* L. (Maize) |
| A-124 | MON-00021-9 x MON-∅∅81∅-6 | Monsanto Company | Stacked insect resistant and herbicide tolerant corn hybrid derived from conventional cross-breeding of the parental lines GA21 (OECD identifider: MON-∅∅∅21-9) and MON810 (OECD identifier: MON-∅∅81∅-6). | *Zea mays* L. (Maize) |
| A-125 | MS3 | Bayer CropScience (Aventis CropScience( AgrEvo)) | Male sterility caused by expression of the barnase ribonuclease gene from Bacillus amyloliquefaciens; PPT resistance was via PPT-acetyltransferase (PAT). | *Zea mays* L. (Maize) |
| A-126 | MS6 | Bayer CropScience (Aventis CropScience( AgrEvo)) | Male sterility caused by expression of the barnase ribonuclease gene from Bacillus amyloliquefaciens; PPT resistance was via PPT-acetyltransferase (PAT). | *Zea mays* L. (Maize) |
| A-127 | NK603 | Monsanto Company | Introduction, by particle bombardment, of a modified 5-enolpyruvyl shikimate-3-phosphate synthase (EPSPS), an enzyme involved in the shikimate biochemical pathway for the production of the aromatic amino acids. | *Zea mays* L. (Maize) |
| A-128 | SYN-BT∅11-1 x MON-∅∅∅21-9 | Syngenta Seeds, Inc. | Stacked insect resistant and herbicide tolerant maize produced by conventional cross breeding of parental lines BT11 (OECD unique identifier: SYN-BT∅11-1) and GA21 (OECD unique identifier: MON-∅∅∅21-9). | *Zea mays* L. (Maize) |
| A-129 | T14, T25 | Bayer CropScience (Aventis CropScience( AgrEvo)) | Glufosinate herbicide tolerant maize produced by inserting the phosphinothricin N-acetyltransferase (PAT) encoding gene from the aerobic actinomycete Streptomyces viridochromogenes. | *Zea mays* L. (Maize) |
| A-130 | TC1507 | Mycogen (c/o Dow AgroSciences ); Pioneer (c/o Dupont) | Insect-resistant and glufosinate ammonium herbicide tolerant maize produced by inserting the cry1F gene from Bacillus thuringiensis var. aizawai and the phosphinothricin N-acetyltransferase encoding gene from Streptomyces viridochromogenes. | *Zea mays* L. (Maize) |
| A-131 | TC1507 x DAS-59122-7 | DOW AgroSciences LLC and Pioneer Hi-Bred International Inc. | Stacked insect resistant and herbicide tolerant maize produced by conventional cross breeding of parental lines TC1507 (OECD unique identifier: DAS-∅15∅7-1) with DAS-59122-7 (OECD unique identifier: DAS-59122-7). Resistance to lepidopteran insects is derived from TC1507 due the presence of the cry1F gene from Bacillus thuringiensis var. aizawai. Corn rootworm-resistance is derived from DAS-59122-7 which contains the cry34Ab1 and cry35Ab1 genes from Bacillus thuringiensis strain PS149B1. Tolerance to glufosinate ammonium herbcicide is derived from TC1507 from the phosphinothricin N-acetyltransferase encoding gene from Streptomyces viridochromogenes. | *Zea mays* L. (Maize) |

When used in the methods of the invention, the compounds of formula I may be in unmodified form or, preferably, formulated together with carriers and adjuvants conventionally employed in the art of formulation.

The invention therefore also relates to a composition for the control of mycotoxin contamination comprising a compound of formula (I) as defined above and an agriculturally acceptable support, carrier or filler.

According to the invention, the term "support" denotes a natural or synthetic, organic or inorganic compound with which the active compound of formula (I) is combined or associated to make it easier to apply, notably to the parts of the plant. This support is thus generally inert and should be agriculturally acceptable. The support may be a solid or a liquid. Examples of suitable supports include clays, natural or synthetic silicates, silica, resins, waxes, solid fertilisers, water, alcohols, in particular butanol, organic solvents, mineral and plant oils and derivatives thereof. Mixtures of such supports may also be used.

The composition according to the invention may also comprise additional components. In particular, the composition may further comprise a surfactant. The surfactant can be an emulsifier, a dispersing agent or a wetting agent of ionic or non-ionic type or a mixture of such surfactants. Mention may be made, for example, of polyacrylic acid salts, lignosulphonic acid salts, phenolsulphonic or naphthalenesulphonic acid salts, polycondensates of ethylene oxide with fatty alcohols or with fatty acids or with fatty amines, substituted phenols (in particular alkylphenols or arylphenols), salts of sulphosuccinic acid esters, taurine derivatives (in particular alkyl taurates), phosphoric esters of polyoxyethylated alcohols or phenols, fatty acid esters of polyols, and derivatives of the present compounds containing sulphate, sulphonate and phosphate functions. The presence of at least one surfactant is generally essential when the active compound and / or the inert support are water-insoluble and when the vector agent for the application is water. Preferably, surfactant content may be comprised from 5% to 40% by weight of the composition.

Colouring agents such as inorganic pigments, for example iron oxide, titanium oxide, ferrocyanblue, and organic pigments such as alizarin, azo and metallophthalocyanine dyes, and trace elements such as iron, manganese, boron, copper, cobalt, molybdenum and zinc salts can be used.

Optionally, other additional components may also be included, e.g. protective colloids, adhesives, thickeners, thixotropic agents, penetration agents, stabilisers, sequestering agents. More generally, the active compounds can be combined with any solid or liquid additive, which complies with the usual formulation techniques.

In general, the composition according to the invention may contain from 0.05 to 99% by weight of active compounds, preferably from 10 to 70% by weight.

The combination or composition according to the invention can be used as such, in form of their formulations or as the use forms prepared therefrom, such as aerosol dispenser, capsule suspension, cold fogging concentrate, dustable powder, emulsifiable concentrate, emulsion oil in water, emulsion water in oil, encapsulated granule, fine granule, flowable concentrate for seed treatment, gas (under pressure), gas generating product, granule, hot fogging concentrate, macrogranule, microgranule, oil dispersible powder, oil miscible flowable concentrate, oil miscible liquid, paste, plant rodlet, powder for dry seed treatment, seed coated with a pesticide, soluble concentrate, soluble powder, solution for seed treatment, suspension concentrate (flowable concentrate), ultra low volume (ULV) liquid, ultra low volume (ULV) suspension, water dispersible granules or tablets, water dispersible powder for slurry treatment, water soluble granules or tablets, water soluble powder for seed treatment and wettable powder.

The treatment of plants and plant parts with the active compound combination according to the invention is carried out directly or by action on their environment, habitat or storage area by means of the normal treatment methods, for example by watering (drenching), drip irrigation, spraying, atomizing, broadcasting, dusting, foaming, spreading-on, and as a powder for dry seed treatment, a solution for seed treatment, a water-soluble powder for seed treatment, a water-soluble powder for slurry treatment, or by encrusting.

These compositions include not only compositions which are ready to be applied to the plant or seed to be treated by means of a suitable device, such as a spraying or dusting device, but also concentrated commercial compositions which must be diluted before application to the crop.

The active compounds within the composition according to the invention can be employed for reducing mycotoxin contamination in crop protection or in the protection of materials.

Within the composition according to the invention, bactericide compounds can be employed in crop protection for example for controlling Pseudomonadaceae, Rhizobiaceae, Enterobacteriaceae, Corynebacteriaceae and Streptomycetaceae.

The composition according to the invention can be used to curatively or preventively reduce the mycotoxin contamination of plants or crops. Thus, according to a further aspect of the invention, there is provided a method for curatively or preventively reduce the mycotoxin contamination of comprising the use of a composition comprising a compound according to formula (I) according to the invention by application to the seed, the plant or to the fruit of the plant or to the soil in which the plant is growing or in which it is desired to grow.

Suitably, the active ingredient may be applied to plant propagation material to be protected by impregnating the plant propagation material, in particular, seeds, either with a liquid formulation of the fungicide or coating it with a solid formulation. In special cases, other types of application are also possible, for example, the specific treatment of plant cuttings or twigs serving propagation.

The present invention will now be described by way of the following non-limiting examples.

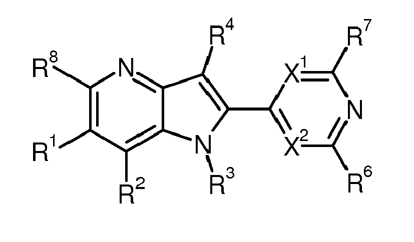

**Table B**

| **Ex.** | **R¹** | **R²** | **R³** | **R⁴** | **X¹** | **R⁶** | **R⁷** | **X²** | **R⁸** | **logP** |
|---|---|---|---|---|---|---|---|---|---|---|
| 1 | H | H | H | 4-fluorophenyl | CH | H | H | CH | H | 1,94[c]; 0,61[b] |
| 2 | H | H | prop-2-yn-1-yl | 4-fluorophenyl | CH | H | H | CH | H | 2,38[c]; 1,33[b] |
| 3 | H | H | H | 4-fluorophenyl | CH | acetylamino | H | CH | H | 1,87[c]; 1,04[b] |
| 4 | H | H | H | 4-fluorophenyl | CH | amino | H | CH | H | |
| 5 | H | H | ethoxy-carbonyl | 4-fluorophenyl | CH | H | H | CH | H | 2,87[c]; 2,16[b] |
| 6 | H | H | ethyl | 4-fluorophenyl | CH | H | H | CH | H | 2,6[c]; 1,16[b] |
| 7 | H | H | 2-fluoroethyl | 4-fluorophenyl | CH | H | H | CH | H | 2,29[c]; 1,1[b] |
| 8 | H | H | 2-methylprop-2-en-1-yl | 4-fluorophenyl | CH | H | H | CH | H | 3,03[c]; 1,58[b] |
| 9 | H | H | 2-methoxy-2-oxoethyl | 4-fluorophenyl | CH | H | H | CH | H | 2,18[c]; 1,57[b] |
| 10 | H | H | cyanomethyl | 4-fluorophenyl | CH | H | H | CH | H | 1,97[c]; 1,44[b] |
| 11 | H | H | prop-2-en-1-yl | 4-fluorophenyl | CH | H | H | CH | H | 2,68[c]; 1,32[b] |
| 12 | H | H | CH₃ | 4-fluorophenyl | CH | H | H | CH | H | 0,86[b] |
| 13 | H | H | acetyl | 4-fluorophenyl | CH | H | H | CH | H | 2,22[c]; 1,93[b] |
| 14 | H | H | cyano | 4-fluorophenyl | CH | H | H | CH | H | 2,44[c]; 2,26[b] |

| | | | | | | | | | | |
|---|---|---|---|---|---|---|---|---|---|---|
| Measurement of logP values was performed according EEC directive 79/831 Annex V.A8 by HPLC (High Performance Liquid Chromatography) on reversed phase columns with the following methods: ^{[a]} Measurement was done at pH 2.3 with 0,1 % phosphoric acid and acetonitrile as eluent. ^{[b]}measurement of LC-MS was done at pH 2,7 with 0,1 % formic acid in water and with acetonitrile (contains 0,1% formic acid) as eluent with a linear gradient from 10 % acetonitrle to 95 % acetonitrile. ^{[c]} Measurement with LC-MS was done at pH 7.8 with 0,001 molar ammonium hydrogen carbonate solution in water as eluent with a linear gradient from 10 % acetonitrile to 95 % acetonitrile. | | | | | | | | | | |

Calibration was done with not branched alkan2-ones (with 3 to 16 carbon atoms) with known logP-values (measurement of logP values using retention times with linear interpolation between successive alkanones).. lambda-maX-values were determined using UV-spectra from 200 nm to 400 nm and the peak values of the chromatographic signals.

### Example 1

### Inhibition of DON/Acetyl-DON production of Fusarium graminearum

Compounds were tested in microtiter plates in 7 concentrations ranging from 0.07 µM to 50 µM in DON-inducing liquid media (1g (NH₄)₂HPO₄, 0.2g MgSO₄x7H₂O, 3g KH₂PO₄, 10g Glycerin, 5g NaCl and 40g Sachharose per liter), supplemented with 10 % oat extract, containing 0.5% DMSO, inoculated with a concentrated spore suspension of *Fusarium graminearum* at a final concentration of 2000 spores/ml.

The plate was covered and incubated at high humidity at 28°C for 7 days.

At start and after 3 days OD measurement at OD620 multiple read per well (square: 3 x 3) was taken to calculate the pI50 growth inhibition.

After 7 days 100µl 84/16 acetonitrile/water was added to each well and a sample of the liquid medium was taken and diluted 1:100 in 10 % acetonitrile. The amounts of DON and Acetyl-DON of the samples were analysed per HPLC-MS/MS and results were used to calculate pI50 inhibition of DON/AcDON production in comparison to a control without compound.

HPLC-MS/MS was done with the following parameters:
Ionization mode: ESI negative
Ionspray voltage: -4500V
Spraygas Temperature: 500°C
Declustering potential: -40V
Collision energy: -22eV
Collision gas: N₂
MRM trace: 355,0 > 264,9; dwell time 150ms
HPLC column: Waters Atlantis T3 (trifunctional C18 bonding, fully endcapped)
Particle size: 3µm
Column size: 50x2 mm
Temperature: 40°C
Solvent A: Water/2.5mM NH₄OAc+0.05% CH₃COOH (v/v)
Solvent B: Methanol/2.5mM NH₄OAc+0.05% CH₃COOH (v/v)
Flow: 400µL/min
Injection volume: 11µL
Gradient:

| Time [min] | A% | B% |
|---|---|---|
| 0 | 100 | 0 |
| 0.75 | 100 | 0 |
| 1.5 | 5 | 95 |
| 4 | 5 | 95 |
| 5 | 100 | 0 |
| 10 | 100 | 0 |

Compounds example numbers 2, 3, 7, 8, 9, 11 and 13 showed an activity of > 80 % of inhibition of DON/AcDON at 50 µM. Example numbers 1, 5, and 12 showed an activity of < 50 % of inhibition of DON/AcDON at 50 µM. Growth inhibition of *Fusarium graminearum* of the examples with activity > 80 % varied from 79 to 99 % at 50 µM.

| **Example no.** | **% inhibition at 50** µ**M** | |
|---|---|---|
| | **DON/AcDON** | ***Fusarium graminearum*** |
| 1 | < 50 % | < 50 % |
| 2 | 98% | 98% |
| 3 | 99% | 80% |
| 5 | < 50 % | < 50 % |
| 7 | 83% | 83% |
| 8 | 100% | 99% |
| 9 | 100% | 90% |
| 11 | 100% | 99% |
| 12 | < 50 % | 56% |
| 13 | 100% | 79% |

### Example 2

### Inhibition of Fumonisin FB1 production of Fusarium proliferatum

Compounds were tested in microtiter plates in 5 concentrations ranging from 0.08 µM to 50 µM in fumonisin-inducing liquid media (0.5g malt extract, 1g yeast extract, 1g bacto peptone, 20 g Fructose, 1g KH₂PO₄, 0.3g MgSO₄x7H₂O, 0.3g KCl, 0.05g ZnSO₄x7H₂O and 0.01g CuSO₄x5H₂O per liter) containing 0.5% DMSO, inoculated with a concentrated spore suspension of *Fusarium proliferatum* at a final concentration of 2000 spores/ml.

Plates were covered and incubated at high humidity at 20 °C for 5 days

At start and after 5 days OD measurement at OD620 multiple read per well (square: 3 x 3) was taken to calculate the pI50 of growth inhibition.

After 5 days samples of each culture medium were taken and diluted 1:1000 in 50 % acetonitrile. The amounts of fumonisin FB1 of the samples were analysed per HPLC-MS/MS and results were used to calculate the pI50 of inhibition of FB1 production in comparison to a control without compound.

HPLC-MS/MS was done with the following parameters:
Ionization mode: ESI positive
Ionspray voltage: 5500V
Spraygas Temperature: 500°C
Declustering potential: 114V
Collision energy: 51eV
Collision gas: N₂
MRM trace: 722,3 > 352,3; dwell time 100ms
HPLC column: Waters Atlantis T3 (trifunctional C18 bonding, fully endcapped)
Particle size: 3µm
Column size: 50x2 mm
Temperature: 40°C
Solvent A: Water+0.1% HCOOH (v/v)
Solvent B: Acetonitrile+0.1% HCOOH (v/v)
Flow: 400µL/min
Injection volume: 5µL

Gradient:

| Time [min] | A% | B% |
|---|---|---|
| 0 | 90 | 10 |
| 2 | 5 | 95 |
| 4 | 5 | 95 |
| 4.1 | 90 | 10 |
| 9 | 90 | 10 |

Compounds example numbers 1, 2, 3, 5, 6, 7, 8, 9, 10, 11, 12 and 13 showed an activity of > 80 % of inhibition of fumonisin FB1 at 50 µM. Example numbers 4 and 14 showed an activity of < 50 % of inhibition of fumonisin FB1 at 50 µM. Growth inhibition of *Fusarium proliferatum* of the examples with activity > 80 % varied from 30 to 100 % at 50 µM.

| **Example no.** | **% inhibition at 50** µ**M** | |
|---|---|---|
| | **FB1** | ***Fusarium proliferatum*** |
| 1 | 99% | 63% |
| 2 | 99% | 100% |
| 3 | 100% | 93% |
| 4 | 45% | 31% |
| 5 | 87% | 44% |
| 6 | 100% | 64% |
| 7 | 100% | 89% |
| 8 | 100% | 97% |
| 9 | 100% | 74% |
| 10 | 100% | 76% |
| 11 | 100% | 97% |
| 12 | 97% | 31% |
| 13 | 100% | 80% |
| 14 | 38% | 1% |

### Example 3

### Inhibition of Aflatoxins production of Aspergillus parasiticus

Compounds were tested in microtiter plates (96 well black flat and transparent bottom) in 10 concentrations ranging from 0.005 µM to 100 µM in Aflatoxin-inducing liquid media (20g sucrose, yeast extract 4g, KH₂PO₄ 1g, and MgSO₄ 7H₂O 0.5g per liter), supplemented with 20mM of Cavasol (hydroxypropyl-beta-cyclodextrin) and containing 1% of DMSO. The assay is started by inoculating the medium with a concentrated spore suspension of *Aspergillus parasiticus* at a final concentration of 1000 spores/ml.

### The plate was covered and incubated at 20°C for 7 days.

After 7 days of culture, OD measurement at OD₆₂₀ₙₘ with multiple read per well (circle: 4 x 4) was taken with an Infinite 1000 (Tecan) to calculate the pI50 of growth inhibition. In the same time bottom fluorescence measurement at Em₃₆₀ₙₘ and Ex₄₂₆ₙₘ with multiple read per well (square: 3 x 3) was taken to calculate the pI50 of aflatoxins inhibition according to Aghamohammadi and Alizadeh, Journal of Luminescence (2007), 127, pp 575 - 582..

Compounds example numbers 1, 2, and 3 showed inhibition of aflatoxin production and of *Aspergillus parasiticus* growth. The pI50 values are listed in the table below.

| **Example no.** | **pI50** | |
|---|---|---|
| | **Aflatoxin production** | ***Aspergillus parasiticus*** |
| 1 | 6.3 | 5.8 |
| 2 | 6.8 | 6.3 |
| 3 | 6.8 | 6.3 |

## Claims

1. A method of reducing the mycotoxin contamination of plants and/or plant material and/or plant propagation material comprising applying to the plant or plant propagation material a effective amount of a compound of formula (I): 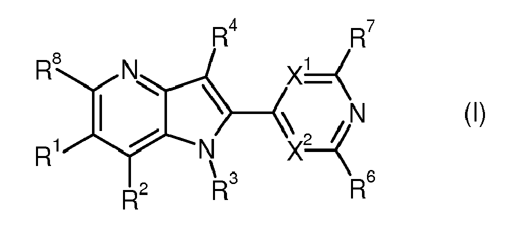 wherein:
X¹ is N or CH;
X₂ is N or CR⁵ ;
R¹ and R² are, independently,: (i) hydrogen, halogen, hydroxyl, cyano or nitro, (ii) optionally substituted alkyl, alkenyl or alkynyl, (iii) optionally substituted aryl, heteroaryl, cyclyl or heterocyclyl, (iv) -C(O)R¹⁰, -C(O)NR¹⁰R¹¹, -C(S)NR¹⁰R¹¹, - C(NOR¹⁰)Rⁿ, -C(O)OR¹⁰, -OR¹⁰, -SR¹⁰, -S(O)R¹⁰, -S(O)NR¹⁰R¹¹, -S(O)₂NR¹⁰R¹¹, - S(O)₂R¹⁰, -NR¹⁰R¹¹, -P(O)(OR¹⁰)(OR¹¹) or -OP(O)(OR¹⁰)(OR¹¹);
R³ is: (i) hydrogen, hydroxyl, cyano or nitro, (ii) optionally substituted alkyl, alkenyl, allenyl, alkynyl or haloalkyl, (iii) optionally substituted aryl, heteroaryl, cyclyl or heterocyclyl or heteroaralkyl, or (iv) C(O)R¹², C(O)OR¹², OR¹², OC(O)R¹², S(O)₂R¹², or NR¹²R¹³_{;}
R⁴ is: (i) hydrogen, halogen, hydroxyl, cyano or nitro, (ii) optionally substituted alkenyl, allenyl, alkynyl or haloalkyl, (iii) optionally substituted aryl, heteroaryl, cyclyl or heterocyclyl or (iv) C(O)R¹⁴, C(O)OR¹⁴, C(NOR¹⁴)R¹⁵, OR¹⁴, SR¹⁴, S(O)NR¹⁴R¹⁵, S(O)₂R¹⁴, or NR¹⁴R¹⁵;
R⁵ is: (i) hydrogen, halogen, hydroxyl, cyano or nitro, (ii) optionally substituted alkyl, alkenyl or alkynyl, (iii) C(O)R¹⁶, C(O)OR¹⁶, OR¹⁶, SR¹⁶, S(O)R¹⁶, S(O)NR¹⁶R¹⁷, S(O)₂R¹⁶, or NR¹⁶R¹⁷;
R⁶ is hydrogen, halogen, cyano, C(O)OR¹⁸, SR¹⁸, NR¹⁸R¹⁹, C(O)NR¹⁸R¹⁹ , N=CR²⁰, C(=NR¹⁸)NR¹⁹R²⁰ or optionally substituted aryl, heteroaryl, cyclyl or heterocyclyl;
R⁷ and R⁸ are, independently, hydrogen, halogen, hydroxyl, cyano, nitro, NR²¹R²² or optionally substituted alkyl;
R¹⁰, R¹¹, R¹⁴, R¹⁵, R¹⁶ and R¹⁷ are, independently, hydrogen, halogen, hydroxyl, cyano, nitro, optionally substituted alkyl, alkoxy, alkenyl or alkynyl, or optionally substituted aryl, heteroaryl, cyclyl or heterocyclyl;
R¹² and R¹³ are, independently, hydrogen, halogen, hydroxyl, cyano, nitro, NR²¹R²², optionally substituted alkyl, alkoxy, alkenyl or alkynyl, or optionally substituted aryl, heteroaryl, cyclyl or heterocyclyl;
R¹⁸ and R¹⁹ are, independently, (i) hydrogen, (ii) optionally substituted alkyl, alkenyl or alkynyl, (iii) optionally substituted aryl, heteroaryl, cyclyl or heterocyclyl, or (iv) C(S)R²³ C(O)R²³, SO₂R²³, C(O)OR²³, OR²³ or C(O)NR²³R²⁴;
R²⁰ is hydroxyl, optionally substituted alkyl or alkoxy, NR²¹R²², or N=CR²¹R²²;
R²¹ and R²² are, independently, hydrogen, optionally substituted alkyl, alkenyl or alkynyl, optionally substituted cyclyl, heterocyclyl, aryl or heteroaryl or aralkyl or C(O)OR²⁵;
R²³ and R²⁴ are, independently, hydrogen, hydroxyl, optionally substituted alkyl, alkenyl or alkynyl, or optionally substituted aryl, heteroaryl, cyclyl or heterocyclyl or aralkyl; and
R²⁵ is optionally susbstituted alkyl, alkenyl or alkynyl;
and/or
independently, (i) R¹ and R², (ii) R¹ and R³ (iii) R² and R³, (iv) R³ and R⁵, (v) R⁵ and R⁶, (vi) R⁵ and R¹⁸, (vii) R⁵ and R¹⁹, (viii) R¹⁴ and R¹⁵ and (ix) R¹⁸ and R¹⁹ form an optionally substituted aryl, heteroaryl, cyclyl or heterocyclyl group containing from 5 to 18 ring atoms; or a salt of N- oxide thereof.

2. The method of claim 1, wherein X¹ is CH.

3. The method of claim 1 or 2, wherein X² is CH.

4. The method of any one of the preceding claims, wherein R¹ is hydrogen, halogen, cyano, optionally substituted C₁₋₆ alkyl, C₂₋₆ alkenyl or C₂₋₆ alkynyl, optionally substituted aryl or C(O)R¹⁰.

5. The method of any one of the preceding claims, wherein R² is hydrogen or C₁₋₆ alkyl.

6. The method of any one of the preceding claims, wherein R³ is hydrogen, hydroxyl, C(O)R¹², OR¹², C(O)OR¹², OC(O)R¹², S(O)₂R¹², optionally substituted C₁₋₆ alkyl, C₂₋₆ alkenyl, C₃₋₆ allenyl, C₂₋₆ alkynyl or optionally substituted saturated cyclyl.

7. The method of claim 6, wherein R³ is cyanomethyl, aminoethyl, aminopropyl, prop-2-enyl, prop-2-ynyl, propa-1,2-dienyl, methoxymethyl, 2fluoroethyl, OCH₂C=CH, OCH₂OCH₃, OCH₂CN, or OCH(CH₃)CN.

8. The method of claim 6 wherein R³ is hydrogen.

9. The method of any one of the preceding claims, wherein R⁴ is hydrogen, halogen, optionally substituted C₂₋₆ alkynyl or optionally substituted aryl or heteroaryl.

10. The method of claim 9, wherein R⁴ is phenyl or 4-fluorophenyl.

11. The method of any preceding claim, wherein R⁶ is hydrogen or NR¹⁸R¹⁹.

12. The method of claim 11 , wherein R⁶ is NHR¹⁹.

13. The method of claim 12, wherein R¹⁹ is C(O)R²³.

14. The method of claim 13 wherein R²³ is selected from optionally substituted alkyl or cyclyl.

15. The method of claim 13 wherein R²³ is selected from hydrogen, methyl, ethyl, *iso* propyl, 1-methylethyl, 1-methylpropyl, 2-dimethylethyl, propyl, 1-methylethenyl, 2-methylprop-1-enyl, but-3-enyl, cyclopropyl, 1-methylcyclopropyl, 1-fluorocyclopropyl or cyclobutyl.

16. The method of any one of the preceding claims, wherein R⁷ and R⁸ are, independently, hydrogen, hydroxyl, cyano, NR²¹R²² or optionally substituted C₁₋₆ alkyl.

17. The method of any one of the preceding claims, wherein the mycotoxins to be reduced are selected from the group of DON, aflatoxins, and fumonisins.

18. A composition for the reduction of mycotoxin contamination of plants and/or plant material and/or plant propagation material comprising a compound of formula I as defined in any one of claims 1 to 17 and an agriculturally acceptable carrier or diluent.

19. The composition of claims 19 which further comprises at least one active ingredient selected from fungicides, herbicides, insecticides, bactericides, acaricides, nematicides and/or plant growth regulators.
